(19)

Europäisches
Patentamt
European
Patent Office
Office européen
des brevets

(11) **EP 4 787 936 A1**

(12) **EUROPEAN PATENT APPLICATION**
published in accordance with Art. 153(4) EPC

(43) Date of publication:
**05.08.2026 Bulletin 2026/32**

(21) Application number: **24870879.4**

(22) Date of filing: **26.09.2024**

(51) International Patent Classification (IPC):
***H04W 24/08*** (2009.01)

(86) International application number:
**PCT/CN2024/121444**

(87) International publication number:
**WO 2025/067339 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.09.2023 CN 202311257158
03.11.2023 CN 202311460316

(71) Applicant: **China United Network
Communications
Group Company Limited
Beijing 100033 (CN)**

(72) Inventors:
• **LI, Yi
  Beijing 100033 (CN)**
• **JIN, Yuchao
  Beijing 100033 (CN)**

• **LI, Deyi
  Beijing 100033 (CN)**
• **ZHU, Xiaomeng
  Beijing 100033 (CN)**
• **ZHENG, Yuting
  Beijing 100033 (CN)**
• **CHENG, Xinzhou
  Beijing 100033 (CN)**
• **WANG, Jingyun
  Beijing 100033 (CN)**
• **CAO, Lijuan
  Beijing 100033 (CN)**
• **LIU, Guanghai
  Beijing 100033 (CN)**

(74) Representative: **Petraz, Gilberto Luigi et al
GLP S.r.l.
Viale Europa Unita, 171
33100 Udine (IT)**

(54) **COVERAGE DISTANCE DETERMINATION METHOD AND DEVICE AND STORAGE MEDIUM**

(57) The present application relates to the technical field of communications, and provides a coverage distance determination method and apparatus and a storage medium, used for solving the technical problem in the prior art that when determining a coverage distance of a cell, TA cannot represent the relationship between the network quality and the coverage distance of the cell. The coverage distance determination method comprises: determining a plurality of network indicators of a target cell in a first preset period, each network indicator comprising a network quality indicator and a distance metrics; and determining, on the basis of network quality indicators and distance metrics in individual network indicators, an average coverage distance of at least one preset network quality indicator range.

S301

Determine a plurality of network indicators of a target cell in a first preset period

S302

On the basis of a network quality indicator and a distance metrics in each network indicator, determine an average coverage distance of at least one preset network quality indicator range

Fig. 3

**Description**

**Cross-reference to Related Applications**

The present application claims the priority of the Chinese patent application submitted to the China National Intellectual Property Administration (the CNIPA) on September 26, 2023, with the application No. 202311257158.2 and entitled "Coverage Distance Determination Method and Device and Storage Medium", and also claims the priority of the Chinese patent application submitted to the CNIPA on November 3, 2023, with the application No. 202311460316.4 and entitled "Coverage Distance Determination Method and Device and Storage Medium", the contents of which are incorporated herein by reference in their entireties.

**Field of the Invention**

The present application relates to the technical field of communications, and in particular to a coverage distance determination method and apparatus, and a storage medium of the same.

**Background of the Invention**

Determining a coverage distance of a cell is a very important part in an existing network structure and is essential for operations such as network planning, which usually refers to a coverage distance of the cell determined through timing advance (TA). In addition, network quality is also an crucial indicator of a target cell, and usually, in the prior art, the network quality is evaluated through average reference signal receiving power (RSRP), a proportion of poor RSRP, average reference signal receiving quality (RSRQ), a proportion of poor RSRQ, a signal to interference plus noise ratio (SINR), a proportion of poor SINR, and the like.

However, when the coverage distance is determined, indicators such as TA are unable to represent the relationship between the network quality of the cell and the coverage distance.

**Summary of the Invention**

The present application provides a coverage distance determination method and apparatus and a storage medium of the same, to solve the technical problem in the prior art that, when a coverage distance of a cell is determined, TA is unable to represent a relationship between the network quality and the coverage distance in the cell.

To achieve the above objective, the present application adopts the following technical solutions.

In a first aspect, provided is a coverage distance determination method, including: determining a plurality of network indicators of a target cell in a first preset period, each of the network indicators including a network quality indicator and a distance metrics; and determining, on the basis of network quality indicators and distance metrics in individual network indicators, an average coverage distance of at least one preset network quality indicator range.

Optionally, there is a correspondence relationship between the network quality indicator and the distance metrics in each of the network indicators. The average coverage distance of any one of the preset network quality indicator ranges is a ratio of a sum of at least one first product to a sum of at least one target network quality indicator, where the first product is a product of one target network quality indicator and a corresponding distance metrics; and the target network quality indicator is a network quality indicator in any one of the preset network quality indicator ranges. Alternatively, the average coverage distance of any one of the preset network quality indicator ranges is an average value of at least one target distance metrics, where one target distance metrics is a distance metrics corresponding to a network quality indicator in any one of the preset network quality indicator ranges.

Optionally, the first preset period includes a plurality of second preset periods; and determining a plurality of network indicators of the target cell in the first preset period includes: acquiring at least one initial network indicator of the target cell in each of the second preset periods; and determining each network indicator on the basis of the at least one initial network indicator in each of the second preset periods. Optionally, when the distance metrics includes timing advance (TA), the at least one preset network quality indicator range is at least one preset first network quality indicator range; or the at least one preset network quality indicator range is at least one preset second network quality indicator range in each antenna azimuth AOA group.

Optionally, the AOA group is any one of the following: an antenna azimuth HAOA group, an antenna azimuth VAOA group, and a spatial coverage direction group. The HAOA group is an azimuth angle group determined by dividing a horizontal coverage plane of the target cell. The VAOA group is an azimuth angle group determined by dividing a vertical coverage plane of the target cell. The spatial coverage direction group is an azimuth angle group in which a VAOA group and a HAOA group coexist. The at least one preset second network quality indicator range in each AOA group is at least one preset third network quality indicator range in each HAOA group; or at least one preset fourth network quality indicator range in each VAOA group; or at least one preset fifth network quality indicator range in each spatial coverage direction group.

Optionally, when the average coverage distance of any one of the preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_TA_{R_k} = \frac{\overline{\Sigma_i} \ \Sigma_j (R_{i,j,k} \times TA_{i,j,k})}{\Sigma_i \ \Sigma_j \ R_{i,j,k}};$$

where $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset second network quality indicator range in each antenna azimuth AOA group, an average coverage distance of a $k$th second network quality indicator range in a $t$th AOA group meets the following formula:

$$Mean\_TA_{R_{k,t}} = \frac{\Sigma_i \ \Sigma_j (R_{i,j,k,t} \times TA_{i,j,k,t})}{\Sigma_i \ \Sigma_j \ R_{i,j,k,t}};$$

where $Mean\_TA_{R_{k,t}}$ is the average coverage distance of the $k$th second network quality indicator range in the $t$th AOA group; $TA_{i,j,k,t}$ is a distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset third network quality indicator range in each HAOA group, an average coverage distance of a $k$th third network quality indicator range in an $m$th HAOA group meets the following formula:

$$Mean\_TA_{R_{k,m}} = \frac{\Sigma_i \ \Sigma_j (R_{i,j,k,m} \times TA_{i,j,k,m})}{\Sigma_i \ \Sigma_j \ R_{i,j,k,m}};$$

where $Mean\_TA_{R_{k,m}}$ is the average coverage distance of the $k$th third network quality indicator range in the $m$th HAOA group; $TA_{i,j,k,t}$ is a distance metrics sent by a $j$th terminal in the $k$th third network quality indicator range in the $m$th HAOA group in an $i$th second preset period; and $R_{i,j,k,t}$ is a network quality indicator corresponding to the distance metrics sent by the $j$th terminal in the $k$th third network quality indicator range in the $m$th HAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fourth network quality indicator range in each VAOA group, an average coverage distance of a $k$th fourth network quality indicator range in an $n$th VAOA group meets the following formula:

$$Mean\_TA_{R_{k,n}} = \frac{\Sigma_i \ \Sigma_j (R_{i,j,k,n} \times TA_{i,j,k,n})}{\Sigma_i \ \Sigma_j \ R_{i,j,k,n}};$$

where $Mean\_TA_{R_{k,n}}$ is the average coverage distance of the kth fourth network quality indicator range in the $n$th VAOA group; $TA_{i,j,k,t}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fifth network quality indicator range in each spatial coverage direction group, the average coverage distance of a $k$th fifth network quality indicator range in an $h$th spatial coverage direction group meets the following formula:

$$Mean\_TA_{R_{k,h}} = \frac{\Sigma_i\ \Sigma_j (R_{i,j,k,h} \times TA_{i,j,k,h})}{\Sigma_i\ \Sigma_j R_{i,j,k,h}};$$

where $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Optionally, when the at least one preset network quality indicator range is at least one preset first network quality indicator range, an average coverage distance of a $k$th first network quality indicator range meets the following formula:

$$Mean\_TA_{R_k} = \frac{\Sigma_i\ \Sigma_j\ TA_{i,j,k}}{\Sigma_i\ \Sigma_j\ N_{i,j,k}};$$

where $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $N_{i,j,k}$ is the number of network indicators sent by the $j$th terminal in the $k$th first network quality indicator range in the $i$th second preset period, or $N_{i,j,k}$ is the number of the second preset periods in the first preset period.

Optionally, when the average coverage distance of any one of the preset network quality indicator ranges is an average value of at least one target distance metrics, and the at least one preset network quality indicator range is at least one preset second network quality indicator range in each antenna azimuth AOA group, an average coverage distance of a $k$th second network quality indicator range in a $t$th AOA group meets the following formula:

$$Mean\_TA_{R_{k,t}} = \frac{\Sigma_i\ \Sigma_j TA_{i,j,k,t}}{\Sigma_i\ \Sigma_j\ N_{i,j,k,t}};$$

where $Mean\_TA_{R_{k,t}}$ is the average coverage distance of the $k$th second network quality indicator range in the $t$th AOA group; $TA_{i,j,k,t}$ is a distance metrics sent by a $j$th terminal in the $k$th second network quality indicator range in the $t$th AOA group in an $i$th second preset period; and $N_{i,j,k,t}$ is the number of network indicators sent by the $j$th terminal in the $k$th second network quality indicator range in the $t$th AOA group in the $i$th second preset period, or $N_{i,j,k,t}$ is the number of the second preset periods in the first preset period.

Optionally, when the average coverage distance of any one of the preset network quality indicator ranges is an average value of at least one target distance metrics, and the at least one preset network quality indicator range is at least one preset third network quality indicator range in each HAOA group, an average coverage distance of a $k$th third network quality indicator range in an $m$th HAOA group meets the following formula:

$$Mean\_TA_{R_{k,m}} = \frac{\Sigma_i\ \Sigma_j TA_{i,j,k,m}}{\Sigma_i\ \Sigma_j\ N_{i,j,k,m}};$$

where $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $N_{i,j,k,m}$ is the number of network indicators sent by the $j$th terminal in the $k$th third network quality indicator range in the $m$th HAOA group in the $i$th second preset period, or $N_{i,j,k,m}$ is the number of the second preset periods in the first preset period.

Optionally, when the average coverage distance of any one of the preset network quality indicator ranges is an average value of at least one target distance metrics, and the at least one preset network quality indicator range is at least one preset fourth network quality indicator range in each VAOA group, an average coverage distance of a $k$th fourth network quality indicator range in an $n$th VAOA group meets the following formula:

$$Mean\_TA_{R_{k,n}} = \frac{\Sigma_i\ \Sigma_j TA_{i,j,k,n}}{\Sigma_i\ \Sigma_j N_{i,j,k,n}};$$

where $Mean\_TA_{R_{k,n}}$ is the average coverage distance of the $k$th fourth network quality indicator range in the $n$th VAOA group; $TA_{i,j,k,t}$ is a distance metrics sent by a $j$th terminal in the $k$th fourth network quality indicator range in the $n$th VAOA group in an $i$th second preset period; and $R_{i,j,k,n}$ is the number of network indicators sent by the $j$th terminal in the $k$th fourth network quality indicator range in the $n$th VAOA group in the $i$th second preset period, or $N_{i,j,k,n}$ is the number of the second preset periods in the first preset period.

Optionally, when the average coverage distance of any one of the preset network quality indicator ranges is an average value of at least one target distance metrics, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

where $Mean\_TA_{R_{k,h}}$ is an average coverage distance of the $k$th fifth network quality indicator range in an $h$th spatial coverage direction group; the $h$th spatial coverage direction group is a direction angle group in which the $m$th VAOA group and the $n$th HAOA group coexist; $TA_{i,j,k,h}$ is a distance metrics sent by a $j$th terminal in the $k$th fifth network quality indicator range in the $h$th spatial coverage direction group in an $i$th second preset period; and $R_{i,j,k,h}$ is the number of network indicators sent by the $j$th terminal in the $k$th fifth network quality indicator range in the $h$th spatial coverage direction group in the $i$th second preset period, or $N_{i,j,k,h}$ is the number of the second preset periods in the first preset period.

Optionally, when the distance metrics includes timing advance in a horizontal direction (HTA), the at least one preset network quality indicator range is at least one preset first network quality indicator range; and the HTA is determined on the basis of TA, a VAOA, and an antenna mechanical downtilt angle of the target cell;

Alternatively, the at least one preset network quality indicator range is at least one preset second network quality indicator range in each antenna azimuth AOA group.

Optionally, the AOA group is any one of the following: an antenna azimuth HAOA group, an antenna azimuth VAOA group, and a spatial coverage direction group. The HAOA group is an azimuth angle group determined by dividing a horizontal coverage plane of the target cell. The VAOA group is an azimuth angle group determined by dividing a vertical coverage plane of the target cell. The spatial coverage direction group is an azimuth angle group in which a VAOA group and a HAOA group coexist. The at least one preset second network quality indicator range in each AOA group is at least one preset third network quality indicator range in each HAOA group; or at least one preset fourth network quality indicator range in each VAOA group; or at least one preset fifth network quality indicator range in each spatial coverage direction group.

Optionally, when the average coverage distance of any one of the preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j (R_{i,j,k} \times HTA_{i,j,k})}{\sum_i \sum_j R_{i,j,k}};$$

where $Mean\_HTA_{R_k}$ is an average coverage distance of the $k$th first network quality indicator range; $HTA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset second network quality indicator range in each antenna azimuth AOA group, an average coverage distance of a $k$th second network quality indicator range in a $t$th AOA group meets the following formula:

$$Mean\_HTA_{R_{k,t}} = \frac{\sum_i \sum_j (R_{i,j,k,t} \times HTA_{i,j,k,t})}{\sum_i \sum_j R_{i,j,k,t}};$$

where $Mean\_HTA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset third network quality indicator range in each HAOA group, an average coverage distance of a $k$th third network quality indicator range in an $m$th HAOA group meets the following formula:

$$Mean\_HTA_{R_{k,m}} = \frac{\sum_i \sum_j (R_{i,j,k,m} \times HTA_{i,j,k,m})}{\sum_i \sum_j R_{i,j,k,m}};$$

where $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fourth network quality indicator range in each VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

where $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_HTA_{R_{k,h}} = \frac{\sum_i \sum_j (R_{i,j,k,h} \times HTA_{i,j,k,h})}{\sum_i \sum_j R_{i,j,k,h}};$$

where $Mean\_HTA_{R_{k,h}}$ is the average coverage distance of the $k$th fifth network quality indicator range in the $h$th spatial coverage direction group; the $h$th spatial coverage direction group is a direction angle group in which the $m$th VAOA group and the nth HAOA group coexist; $HTA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Optionally, when the average coverage distance of any one of the preset network quality indicator ranges is an average value of at least one target distance metrics, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j HTA_{i,j,k}}{\sum_i \sum_j N_{i,j,k}};$$

where $Mean\_HTA_{R_k}$ is the average coverage distance of the $k$th first network quality indicator range; $HTA_{i,j,k}$ is a distance metrics sent by a $j$th terminal in the $k$th first network quality indicator range in an $i$th second preset period; and $N_{i,j,k}$ is the number of network indicators sent by the $j$th terminal in the $k$th first network quality indicator range in the $i$th second preset period, or $N_{i,j,k}$ is the number of the second preset periods in the first preset period.

Optionally, when the average coverage distance of any one of the preset network quality indicator ranges is an average value of at least one target distance metrics, and the at least one preset network quality indicator range is at least one preset second network quality indicator range in each antenna azimuth AOA group, an average coverage distance of a $k$th second network quality indicator range in a $t$th AOA group meets the following formula:

$$Mean\_HTA_{R_{k,t}} = \frac{\sum_i \sum_j HTA_{i,j,k,t}}{\sum_i \sum_j N_{i,j,k,t}};$$

where $MeanHTA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $N_{i,j,k,t}$ is the number of network indicators sent by the $j$th terminal in the $k$th second network quality indicator range in the $t$th AOA group in the $i$th second preset period, or $N_{i,j,k,t}$ is the number of the second preset periods in the first preset period.

Optionally, when the average coverage distance of any one of the preset network quality indicator ranges is an average value of at least one target distance metrics, and the at least one preset network quality indicator range is at least one preset third network quality indicator range in each HAOA group, an average coverage distance of a $k$th third network quality indicator range in an $m$th HAOA group meets the following formula:

$$Mean\_HTA_{R_{k,m}} = \frac{\sum_i \sum_j HTA_{i,j,k,m}}{\sum_i \sum_j N_{i,j,k,m}};$$

where $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $N_{i,j,k,m}$ is the number of network indicators sent by the $j$th terminal in the $k$th third network quality indicator range in the $m$th HAOA group in the $i$th second preset period, or $N_{i,j,k,m}$ is the number of the second preset periods in the first preset period.

Optionally, when the average coverage distance of any one of the preset network quality indicator ranges is an average value of at least one target distance metrics, and the at least one preset network quality indicator range is at least one preset fourth network quality indicator range in each VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

where $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is the number of network indicators sent by the $j$th terminal in the $k$th fourth network quality indicator range in the $n$th VAOA group in the $i$th second preset period, or $N_{i,j,k,n}$ is the number of the second preset periods in the first preset period.

In a second aspect, provided is a coverage distance determination apparatus, including: a determination unit. The determination unit is configured to determine a plurality of network indicators of a target cell in a first preset period, each network indicator including a network quality indicator and a distance metrics; and the determination unit is further configured to determine, on the basis of network quality indicators and distance metrics in individual network indicators, an average coverage distance of at least one preset network quality indicator range.

Optionally, there is a correspondence relationship between the network quality indicator and the distance metrics in each of the network indicators. The average coverage distance of any one of the preset network quality indicator ranges is a ratio of a sum of at least one first product to a sum of at least one target network quality indicator, where the first product is a product of one target network quality indicator and a corresponding distance metrics; and the target network quality indicator is a network quality indicator in any one of the preset network quality indicator ranges.

Alternatively, the average coverage distance of any one of the preset network quality indicator ranges is an average value of at least one target distance metrics, where one target distance metrics is a distance metrics corresponding to a network quality indicator in any one of the preset network quality indicator ranges.

Optionally, the first preset period includes a plurality of second preset periods. The determination unit is specifically configured to acquire at least one initial network indicator of the target cell in each of the second preset periods; and determine, on the basis of the at least one initial network indicator in each of the second preset periods, at least each network indicator.

Optionally, when the distance metrics includes timing advance TA, the at least one preset network quality indicator range is at least one preset first network quality indicator range; or the at least one preset network quality indicator range is at least one preset second network quality indicator range in each antenna azimuth AOA group.

Optionally, the AOA group is any one of the following: an antenna azimuth HAOA group, an antenna azimuth VAOA group, and a spatial coverage direction group. The HAOA group is an azimuth angle group determined by dividing a horizontal coverage plane of the target cell. The VAOA group is an azimuth angle group determined by dividing a vertical coverage plane of the target cell. The spatial coverage direction group is an azimuth angle group in which a VAOA group and a HAOA group coexist. The at least one preset second network quality indicator range in each AOA group is at least one preset third network quality indicator range in each HAOA group; or at least one preset fourth network quality indicator range in each VAOA group; or at least one preset fifth network quality indicator range in each spatial coverage direction group.

Optionally, when the average coverage distance of any one of the preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_TA_{R_k} = \frac{\sum_i \sum_j (R_{i,j,k} \times TA_{i,j,k})}{\sum_i \sum_j R_{i,j,k}};$$

where $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset second network quality indicator range in each antenna azimuth AOA group, an average coverage distance of a $k$th second network quality indicator range in a $t$th AOA group meets the following formula:

$$Mean\_TA_{R_{k,t}} = \frac{\sum_i \sum_j (R_{i,j,k,t} \times TA_{i,j,k,t})}{\sum_i \sum_j R_{i,j,k,t}};$$

where $Mean\_TA_{R_{k,t}}$ is the average coverage distance of the $k$th second network quality indicator range in the $t$th AOA group; $TA_{i,j,k,t}$ is the distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset third network quality indicator range in each HAOA group, an average coverage distance of a $k$th third network quality indicator range in an $m$th HAOA group meets the following formula:

$$Mean\_TA_{R_{k,m}} = \frac{\sum_i \sum_j (R_{i,j,k,m} \times TA_{i,j,k,m})}{\sum_i \sum_j R_{i,j,k,m}};$$

where $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fourth network quality indicator range in each VAOA group, an average coverage distance of a $k$th fourth network quality indicator range in an $n$th VAOA group meets the following formula:

$$Mean\_TA_{R_{k,n}} = \frac{\sum_i \sum_j (R_{i,j,k,n} \times TA_{i,j,k,n})}{\sum_i \sum_j R_{i,j,k,n}};$$

where $Mean\_TA_{R_{k,n}}$ the average coverage distance of the $k$th fourth network quality indicator range in the $n$th VAOA group; $TA_{i,j,k,t}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

where $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Optionally, when the at least one preset network quality indicator range is at least one preset first network quality indicator range, an average coverage distance of a $k$th first network quality indicator range meets the following formula:

$$Mean\_TA_{R_k} = \frac{\sum_i \sum_j TA_{i,j,k}}{\sum_i \sum_j N_{i,j,k}};$$

where $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $N_{i,j,k}$ is the number of network indicators sent by the $j$th terminal in the $k$th first network quality indicator range in the $i$th second preset period, or $N_{i,j,k}$ is the number of the second preset periods in the first preset period.

Optionally, when the average coverage distance of any one of the preset network quality indicator ranges is an average value of at least one target distance metrics, and the at least one preset network quality indicator range is at least one preset second network quality indicator range in each antenna azimuth AOA group, an average coverage distance of a $k$th second network quality indicator range in a $t$th AOA group meets the following formula:

$$Mean\_TA_{R_{k,t}} = \frac{\sum_i \sum_j TA_{i,j,k,t}}{\sum_i \sum_j N_{i,j,k,t}};$$

where $Mean\_TA_{R_{k,t}}$ is the average coverage distance of the $k$th second network quality indicator range in the $t$th AOA group; $TA_{i,j,k,t}$ is a distance metrics sent by a $j$th terminal in the $k$th second network quality indicator range in the $t$th AOA group in an $i$th second preset period; and $N_{i,j,k,t}$ is the number of network indicators sent by the $j$th terminal in the $k$th second network quality indicator range in the $t$th AOA group in the $i$th second preset period, or $N_{i,j,k,t}$ is the number of the second preset periods in the first preset period.

Optionally, when the average coverage distance of any one of the preset network quality indicator ranges is an average value of at least one target distance metrics, and the at least one preset network quality indicator range is at least one preset third network quality indicator range in each HAOA group, an average coverage distance of a $k$th third network quality indicator range in an $m$th HAOA group meets the following formula:

$$Mean\_TA_{R_{k,m}} = \frac{\sum_i \sum_j TA_{i,j,k,m}}{\sum_i \sum_j N_{i,j,k,m}};$$

where $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $N_{i,j,k,m}$ is the number of network indicators sent by the $j$th terminal in the $k$th third network quality indicator range in the $m$th HAOA group in the $i$th second preset period, or $N_{i,j,k,m}$ is the number of the second preset periods in the first preset period.

Optionally, when the average coverage distance of any one of the network quality indicator ranges is an average value of at least one target distance metrics, and the at least one preset network quality indicator range is at least one preset fourth network quality indicator range in each VAOA group, an average coverage distance of a $k$th fourth network quality indicator range in an $n$th VAOA group meets the following formula:

$$Mean\_TA_{R_{k,n}} = \frac{\sum_i \sum_j TA_{i,j,k,n}}{\sum_i \sum_j N_{i,j,k,n}};$$

where $Mean\_TA_{R_{k,n}}$ is the average coverage distance of the $k$th fourth network quality indicator range in the $n$th VAOA group; $TA_{i,j,k,t}$ is a distance metrics sent by a $j$th terminal in the $k$th fourth network quality indicator range in the $n$th VAOA group in an $i$th second preset period; and $R_{i,j,k,n}$ is the number of network indicators sent by the $j$th terminal in the $k$th fourth network quality indicator range in the $n$th VAOA group in the $i$th second preset period, or $N_{i,j,k,n}$ is the number of the second preset periods in the first preset period.

Optionally, when the average coverage distance of any one of the preset network quality indicator ranges is an average value of at least one target distance metrics, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

where $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by a $j$th terminal in the $k$th fifth network quality indicator range in the $h$th spatial coverage direction group in an $i$th second preset period; and $R_{i,j,k,h}$ is the number of network indicators sent by the $j$th terminal in the $k$th fifth network quality indicator range in the $h$th spatial coverage direction group in the $i$th second preset period, or $N_{i,j,k,h}$ is the number of the second preset periods in the first preset period.

Optionally, when the distance metrics includes timing advance in a horizontal direction, HTA, the at least one preset network quality indicator range is at least one preset first network quality indicator range; and the HTA is determined on the basis of TA, a VAOA, and an antenna mechanical downtilt angle of the target cell.

Alternatively, the at least one preset network quality indicator range is at least one preset second network quality indicator range in each antenna azimuth AOA group.

Optionally, the AOA group is any one of the following: an antenna azimuth HAOA group, an antenna azimuth VAOA group, and a spatial coverage direction group. The HAOA group is an azimuth angle group determined by dividing a horizontal coverage plane of the target cell. The VAOA group is an azimuth angle group determined by dividing a vertical coverage plane of the target cell. The spatial coverage direction group is an azimuth angle group in which a VAOA group and a HAOA group coexist. The at least one preset second network quality indicator range in each AOA group is at least one preset third network quality indicator range in each HAOA group; or at least one preset fourth network quality indicator range in each VAOA group; or at least one preset fifth network quality indicator range in each spatial coverage direction group.

Optionally, when the average coverage distance of any one of the preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j (R_{i,j,k} \times HTA_{i,j,k})}{\sum_i \sum_j R_{i,j,k}};$$

where $Mean\_HTA_{R_k}$ is the average coverage distance of the $k$th first network quality indicator range; $HTA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset second network quality indicator range in each antenna azimuth AOA group, an average coverage distance of a $k$th second network quality indicator range in a $t$th AOA group meets the following formula:

$$Mean\_HTA_{R_{k,t}} = \frac{\sum_i \sum_j (R_{i,j,k,t} \times HTA_{i,j,k,t})}{\sum_i \sum_j R_{i,j,k,t}};$$

where $Mean\_HTA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset third network quality indicator range in each HAOA group, an average coverage distance of a $k$th third network quality indicator range in an $m$th HAOA group meets the following formula:

$$Mean\_HTA_{R_{k,m}} = \frac{\sum_i \sum_j (R_{i,j,k,m} \times HTA_{i,j,k,m})}{\sum_i \sum_j R_{i,j,k,m}};$$

where $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fourth network quality indicator range in each VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

where $Mean\_HTA_{R_{k,n}}$ is an average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Optionally, when the average coverage distance of any one of the preset network quality indicator ranges is a ratio of a sum of at least one first product to a sum of at least one target network quality indicator, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_HTA_{R_{k,h}} = \frac{\sum_i \sum_j (R_{i,j,k,h} \times HTA_{i,j,k,h})}{\sum_i \sum_j R_{i,j,k,h}};$$

where $Mean\_HTA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $HTA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Optionally, when the average coverage distance of any one of the preset network quality indicator ranges is an average value of at least one target distance metrics, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j HTA_{i,j,k}}{\sum_i \sum_j N_{i,j,k}};$$

where $Mean\_HTA_{R_k}$ is the average coverage distance of the $k$th first network quality indicator range; $HTA_{i,j,k}$ is a distance metrics sent by a $j$th terminal in the $k$th first network quality indicator range in an $i$th second preset period; and $N_{i,j,k}$ is the number of network indicators sent by the $j$th terminal in the $k$th first network quality indicator range in the $i$th second preset period, or $N_{i,j,k}$ is the number of the second preset periods in the first preset period.

Optionally, when the average coverage distance of any one of the preset network quality indicator ranges is an average value of at least one target distance metrics, and the at least one preset network quality indicator range is at least one preset second network quality indicator range in each antenna azimuth AOA group, an average coverage distance of a $k$th second network quality indicator range in a $t$th AOA group meets the following formula:

$$Mean\_HTA_{R_{k,t}} = \frac{\sum_i \sum_j HTA_{i,j,k,t}}{\sum_i \sum_j N_{i,j,k,t}};$$

where $Mean\_HTA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $N_{i,j,k,t}$ is the number of network indicators sent by the $j$th terminal in the $k$th second network quality indicator range in the $t$th AOA group in the $i$th second preset period, or $N_{i,j,k,t}$ is the number of the second preset periods in the first preset period.

Optionally, when the average coverage distance of any one of the preset network quality indicator ranges is an average value of at least one target distance metrics, and the at least one preset network quality indicator range is at least one preset third network quality indicator range in each HAOA group, an average coverage distance of a $k$th third network quality indicator range in an $m$th HAOA group meets the following formula:

$$Mean\_HTA_{R_{k,m}} = \frac{\sum_i \sum_j HTA_{i,j,k,m}}{\sum_i \sum_j N_{i,j,k,m}};$$

where $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $N_{i,j,k,m}$ is the number of network indicators sent by the $j$th terminal in the $k$th third network quality indicator range in the $m$th HAOA group in the $i$th second preset period, or $N_{i,j,k,m}$ is the number of the second preset periods in the first preset period.

Optionally, when the average coverage distance of any one of the preset network quality indicator ranges is an average value of at least one target distance metrics, and the at least one preset network quality indicator range is at least one preset fourth network quality indicator range in each VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

where $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is the number of network indicators sent by the $j$th terminal in the $k$th fourth network quality indicator range in the $n$th VAOA group in the $i$th second preset period, or $N_{i,j,k,n}$ is the number of the second preset periods in the first preset period.

In a third aspect, provided is a coverage distance determination apparatus, including a memory and a processor. The memory is configured to store computer-executable instructions, and the processor is connected to the memory through a bus. When the coverage distance determination apparatus runs, the processor executes the computer-executable instructions stored in the memory, such that the coverage distance determination apparatus implements the coverage distance determination method according to the first aspect.

The coverage distance determination apparatus may be a network device, or may be a part of the network device, for example, a chip system in a network device. The chip system is used to support the network device to implement functions involved in the first aspect and any possible implementation of the first aspect, for example, acquiring, determining, and sending data and/or information involved in the above coverage distance determination method. The chip system includes a chip, and may also include another discrete device or circuit structure.

In a fourth aspect, provided is a computer-readable storage medium, including computer-executable instructions that, when executed on a computer, cause the computer to implement the coverage distance determination method according to the first aspect.

In a fifth aspect, further provided is a computer program product, including computer instructions that, when executed on the coverage distance determination apparatus, cause the coverage distance determination apparatus to implement the coverage distance determination method according to the first aspect.

It should be noted that the above computer instructions may be stored in whole or in part on the computer-readable storage medium. The computer-readable storage medium may be encapsulated together with the processor of the coverage distance determination apparatus, or may be encapsulated separately from the processor of the coverage distance determination apparatus, which is not limited to the embodiments of the present application.

For descriptions of the second aspect, the third aspect, the fourth aspect, and the fifth aspect in the present application, reference may be made to the detailed description of the first aspect.

In the embodiments of the present application, the name of the coverage distance determination apparatus mentioned above will not constitute any limitation on devices or functional modules, and in actual implementations, the devices or functional modules may appear with other names. For example, a receiving unit may also be referred to as a receiving module, a receiver, and the like. Provided that the functions of the devices are similar to those in the present application, the devices fall within the scope of the claims of the present application and equivalent technologies thereof.

The technical solutions provided in the present application at least achieve the following advantageous effects.

According to any one of the foregoing aspects, provided in the present application is a coverage distance determination method, including: acquiring, by an electronic device, a plurality of network indicators of a target cell in a first preset period, each of the network indicators including a network quality indicator and a distance metrics; and then determining, on the basis of network quality indicators and distance metrics in individual network indicators, an average coverage distance of at least one preset network quality indicator range.

It can be seen from the above that after acquiring the network quality indicators and the distance metrics, the electronic device can determine an average coverage distance of each preset network quality indicator range on the basis of the plurality of network indicators. As the preset network quality indicator range indicates a network quality range of the target cell, the average coverage distance can indicate the relationship between the network quality range of the target cell and the coverage distances, such that an operator can perform operations such as network optimization and base station planning on the basis of the average coverage distance.

For beneficial effects of the first aspect, the second aspect, the third aspect, the fourth aspect, and the fifth aspect in the present application, reference may be made to analysis of the foregoing beneficial effects, and details are not described herein again.

## **Brief Description of the Drawings**

Fig. 1 is a schematic structural diagram of a coverage distance determination system provided by an embodiment of the present application;

Fig. 2 is a schematic diagram of a hardware structure of a coverage distance determination apparatus provided by an embodiment of the present application;

Fig. 3 is a schematic flowchart 1 of a coverage distance determination method provided by an embodiment of the present application;

Fig. 4 is a schematic flowchart 2 of a coverage distance determination method provided by an embodiment of the present application;

Fig. 5 is a schematic flowchart 3 of a coverage distance determination method provided by an embodiment of the present application;

Fig. 6 is a schematic flowchart 4 of a coverage distance determination method provided by an embodiment of the present application;

Fig. 7 is a schematic flowchart 5 of a coverage distance determination method provided by an embodiment of the present application;

Fig. 8 is a schematic flowchart 6 of a coverage distance determination method provided by an embodiment of the present application;

Fig. 9 is a schematic flowchart 7 of a coverage distance determination method provided by an embodiment of the present application;

Fig. 10 is a schematic flowchart 8 of a coverage distance determination method provided by an embodiment of the present application;

Fig. 11 is a schematic flowchart 9 of a coverage distance determination method provided by an embodiment of the present application;

Fig. 12 is a schematic flowchart 10 of a coverage distance determination method provided by an embodiment of the present application;

Fig. 13 is a schematic flowchart 11 of a coverage distance determination method provided by an embodiment of the present application; and

Fig. 14 is a schematic structural diagram of a coverage distance determination apparatus provided by an embodiment of the present application.

## Detailed Description of the Embodiments

The technical solutions in the embodiments of the present application will be described clearly and completely with reference to the accompanying drawings in the embodiments of the present application. Apparently, the embodiments as described are merely some rather than all of the embodiments of the present application. According to the embodiments in the present application, all other embodiments obtained by those skilled in the art without creative efforts fall within the protection scope of the present application.

It should be noted that in the embodiments of the present application, words such as "exemplary" or "for example" are used to indicate an example, an illustration, or a description. Any embodiment or design scheme described as an "example" in the present application should not be construed as being more preferred or having more advantages than another embodiment or design scheme. Exactly, the words such as "exemplary" or "for example" are used to present a related concept in a specific manner.

In order to clearly describe the technical solutions of the embodiments of the present application, in the embodiments of the present application, words such as "first" and "second" are used to distinguish between same items or similar items having basically same functions and effects, and those skilled in the art may understand that the words such as "first" and "second" are not used to define the number and the execution order.

As described in the background, determination of a coverage distance of a cell is a very important part in an existing network structure and is essential for operations such as network planning, which usually refers to a coverage distance of the cell determined through timing advance (TA). In addition, network quality is also an crucial indicator of a target cell, and usually, in the prior art, the network quality is evaluated through average reference signal receiving power (RSRP), a proportion of poor RSRP, average reference signal receiving quality (RSRQ), a proportion of poor RSRQ, a signal to interference plus noise ratio (SINR), a proportion of poor SINR, and the like.

However, when the coverage distance is determined, indicators such as TA are unable to represent the relationship between the network quality of the cell and the coverage distance.

For ease of understanding, terms involved in the present application are first described as following.

(1) 5th Generation Mobile Communication Technology (5G) Measurement Report (MR)

Measurement is a critical function in a 5G New Radio (NR) system. MR data acquired through the measurement may be used to enable a radio resource control sublayer in the 5G NR system to trigger an event such as cell selection, cell reselection, and cell handover, or may be used to operate and maintain the 5G NR system and determine a running state of the 5G NR system, and the like.

A manner by which a terminal reports the MR data may be based on triggering due to an event or periodic triggering. For the basis on periodic triggering, a reporting period is required to be set. For the basis on triggering due to an event, an event that has been started in the system may be used for triggering. The reported MR data may include information such as RSRP, RSRQ, SINR, TA, Angle of Arrival (AOA), Physical Cell Identifier (PCI), and latitude and longitude.

(2) RSRP

RSRP is used to indicate the magnitude of a power by which a terminal receives a reference signal from a serving cell, and is an important indicator for reflecting the network quality of the serving cell. Table 1 shows a schematic table of a value range of the RSRP measured by a base station.

Table 1

| Report Values from OMC-R Northbound Interface | 3GPP Regulated Report Values | Range Distribution of Measurement Data (Unit: dBm) |
|---|---|---|
| 0 | SS-RSRP_00 | SS-RSRP < -156 |
| 1 | SS-RSRP_01 | $-156 \leq$ SS-RSRP < -155 |
| 2 | SS-RSRP_02 | $-155 \leq$ SS-RSRP < -154 |
| ... | ... | ... |

(continued)

| Report Values from OMC-R Northbound Interface | 3GPP Regulated Report Values | Range Distribution of Measurement Data (Unit: dBm) |
|---|---|---|
| 124 | SS-RSRP_124 | -33 ≤ SS-RSRP < -32 |
| 125 | SS-RSRP_125 | -32 ≤ SS-RSRP < -31 |
| 126 | SS-RSRP_126 | -31 ≤ SS-RSRP |
| 127 | SS-RSRP_127 | Infinity |

where report values from a base station subsystem operation and maintenance center (OMC-R) northbound interface range from 1 to 127. Report values regulated by the 3rd Generation Partnership Project (3GPP) range from synchronization signal reference signal receiving power (SS-RSRP)_00 to SS-RSRP_127. Range distribution of the measurement data is in one-to-one correspondence with the report values, so that a report value that a measured measurement value corresponds to may be determined according to the range distribution of measurement data and reported through the OMC-R northbound interface.

(3) TA

TA represents signal propagation time from a terminal to a base station. Because the signal propagation speed is the speed of light, a distance from the terminal to the base station may be determined through light-speed TA. Table 2 shows a schematic table of a TA value range.

Table 2

| Report Value from OMC-R Northbound Interface | Range Distribution of Measurement Data (Unit: s) |
|---|---|
| 0 | TADV < 16/2u |
| 1 | 16/2u ≤ TADV < 32/2u |
| 2 | 32/2u ≤ TADV < 48/2u |
| ... | ... |
| 3845 | 61520/2u ≤ TADV < 61536/2u |
| 3846 | 61536/2u ≤ TADV |

where report values from the OMC-R northbound interface range from 0 to 3846. Range distribution of measurement data is used to indicate data distribution of measured timing advance (TA) for sending and is in one-to-one correspondence with the report values, so that the report values that a measured measurement values corresponds to may be determined according to the range distribution of measurement data and reported through the OMC-R northbound interface.

Timing Advance Displacement (TA_Dis) may be determined as $3*10^8*(16*Ts)/(2*2^u)$ on the basis of TA, where Ts=1/(15000*2048), and u is related to subcarrier spacing. Table 3 shows a schematic table of u and the subcarrier spacing.

Table 3

| u | $N_{symb}^{slot}$ | $N_{slot}^{frame,u}$ | $N_{slot}^{subframe,u}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

where Table 3 shows Number of OFDM symbols per slot ( $N_{symb}^{slot}$ ), slots ( $N_{slot}^{frame,u}$ ) per frame, and slots ( $N_{slot}^{subframe,u}$ )

per subframe: Table 4.3.2-1: Number of OFDM symbols per slot, slots per frame, and slots per subframe for normal cyclic prefix.

(4) Antenna Horizontal Angle of Arrival (HAOA)

HAOA is used to indicate an estimated angle of a terminal relative to a reference direction (i.e., an antenna azimuth) being of a horizontal direction. Field values are of integer type, and Table 4 shows a schematic table of a value range of the HAOA.

Table 4

| Report Value from OMC-R Northbound Interface | Range Distribution of Measurement Data (Unit: degree) |
|---|---|
| 0 | 0£HAOA < 1 |
| 1 | 1£HAOA < 2 |
| 2 | 2£HAOA < 3 |
| ... | ... |
| 357 | 357£HAOA < 358 |
| 358 | 358£HAOA < 359 |
| 359 | 359£HAOA < 360 |

where Table 4 shows a correspondence between the report values from the OMC-R northbound interface and range distribution of the HAOA data.

(5) Antenna Vertical Angle of Arrival (VAOA)

VAOA is used to indicate an estimated angle of a terminal relative to a reference direction (i.e., an antenna mechanical downtilt angle) being of a vertical direction. Field values are of integer type, and Table 5 shows a schematic table of a value range of VAOA.

Table 5

| Report Value from OMC-R Northbound Interface | Measuring Data Range Distribution (Unit: degree) |
|---|---|
| 0 | 0£VAOA < 1 |
| 1 | 1£VAOA < 2 |
| 2 | 2£VAOA < 3 |
| … | ... |
| 357 | 357£VAOA < 358 |
| 358 | 358£VAOA < 359 |
| 359 | 359£VAOA < 360 |

where Table 5 shows a correspondence between the report values from the OMC-R northbound interface and range distribution of the VAOA data.

For the foregoing problems, provided in the present application is a coverage distance determination method, including: determining, by an electronic device, a plurality of network indicators of a target cell in a first preset period, each of the network indicators including a network quality indicator and a distance metrics; and then, determining, by the electronic device, an average coverage distance of at least one preset network quality indicator range on the basis of network quality indicators and distance metrics in individual network indicators.

It can be seen from the above that after acquiring network quality indicators and distance metrics, the electronic device may determine an average coverage distance of each preset network quality indicator range on the basis of the plurality of network indicators. As the preset network quality indicator range indicates a range of network quality of the target cell, the average coverage distance can indicate the relationship between the range of network quality of the target cell and the coverage distance, such that an operator can perform operations such as network optimization and base station planning on the basis of the average coverage distance.

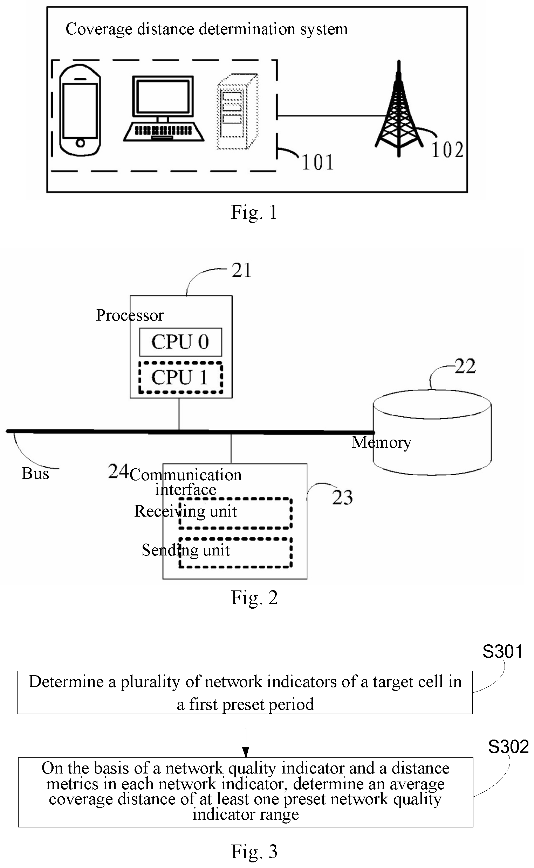

The coverage distance determination method is applicable to a coverage distance determination system. Fig. 1 shows a structure of the coverage distance determination system. As shown in Fig. 1, the coverage distance determination system includes an electronic device 101 and a base station 102.

The electronic device 101 is in communication connection with the base station 102.

In the present application, the electronic device 101 may acquire network indicators of a target cell from the base station 102, and determine average coverage distances with respect to different preset network quality indicator ranges on the basis of distance metrics and network quality indicators in the network indicators.

The base station 102 is configured to send the network indicators to the electronic device 101.

Optionally, the electronic device 101 may acquire the network indicators through a network device (i.e., OMC server), which is not limited to the embodiment of the present application.

Optionally, the electronic device 101 may be a server, a terminal, a base station 102, or other type of electronic device, which is not limited to the embodiment of the present application.

Optionally, the terminal mentioned above may refer to a device providing voice and/or data connectivity to a user, a handheld device having a wireless connection function, or any other processing devices connected to a wireless modem. The terminal may communicate with one or more core networks via a radio access network(s) (RAN). The terminal may be a mobile terminal, such as a mobile phone (or referred to as a "cellular" phone) and a computer having the mobile terminal, or may be a portable, pocket-sized, handheld, computer built-in, or vehicle-mounted mobile device that exchanges language and/or data with the radio access network(s), for example, a mobile phone, a tablet computer, a notebook computer, a netbook, or a personal digital assistant (PDA).

The server mentioned above may be a server in a server cluster (consisting of a plurality of servers), a chip in the server, or a system-on-chip in the server, or otherwise may be implemented through a virtual machine (VM) deployed on a physical machine, which is not limited to the embodiment of the present application.

A basic hardware structure of the electronic device 101 includes elements that are included in an coverage distance determination apparatus shown in Fig. 2. hardware structure of the electronic device 101 will be introduced as following by taking the coverage distance determination apparatus shown in Fig. 2 as an example.

Fig. 2 is a schematic diagram of a hardware structure of a coverage distance determination apparatus provided by an embodiment of the present application. The coverage distance determination apparatus includes a processor 21, a memory 22, a communication interface 23, and a bus 24. The processor 21, the memory 22, and the communication interface 23 may be connected through the bus 24.

The processor 21 is a control center of the coverage distance determination apparatus, and it may be in a form of a processor, or may be a general term of a plurality of processing elements. For example, the processor 21 may be a general-purpose central processing unit (CPU) or other general-purpose processor. The general-purpose processor may be a microprocessor or any conventional processor.

As an embodiment, the processor 21 may include one or more CPUs, for example, a CPU 0 and a CPU 1 shown in Fig. 2.

The memory 22 may be a read-only memory (ROM) or other type of static storage device that can store static information and instructions; a random access memory (RAM) or other type of dynamic storage device that can store information and instructions; or an electrically erasable programmable read-only memory (EEPROM), a magnetic disk storage medium or other magnetic storage device, or any other medium that can be used to carry or store desired program codes in a form of an instruction or a data structure and that can be accessed by a computer, but is not limited thereto.

In a possible implementation, the memory 22 may exist independently of the processor 21, and the memory 22 may be connected to the processor 21 through the bus 24, and is configured to store instructions or program codes. When invoking and executing the instructions or the program codes stored in the memory 22, the processor 21 can implement the coverage distance determination method provided by the following embodiments of the present application.

In the embodiment of the present application, for the electronic device 101, software programs stored in the memory 22 are different, so functions implemented by the electronic device 101 differs from each other. The functions performed by the devices will be described in conjunction with the following flowcharts.

In another possible implementation, the memory 22 may also be integrated with the processor 21.

The communication interface 23 is configured to connect the coverage distance determination apparatus to another device through a communication network, where the communication network may be an Ethernet, a radio access network, a wireless local area network (WLAN), and the like. The communication interface 23 may include a receiving unit configured to receive data and a sending unit configured to send data.

The bus 24 may be an industry standard architecture (ISA) bus, a peripheral component interconnect (PCI) bus, an extended industry standard architecture (EISA) bus, or the like. The bus may be classified into an address bus, a data bus, a control bus, and the like. For ease of representation, only one thick line is used for representation of buses in FIG. 2, which, however, does not mean that there is only one bus or one type of bus.

It should be noted that the structure shown in Fig. 2 does not constitute a limitation on the coverage distance determination apparatus, Rather, in addition to the components shown in Fig. 2, the coverage distance determination apparatus may include more or fewer components than those shown in the figure, or have a combination of some components, or have a different arrangement of the components.

The coverage distance determination method provided by the embodiment of the present application is described in detail below with reference to the accompanying drawings. The coverage distance determination method provided by the embodiment of the present application is applied to the electronic device 101 in the coverage distance determination system shown in Fig. 1. As shown in Fig. 3, the coverage distance determination method provided by the embodiment of the present application includes:

S301: Determine, by an electronic device, a plurality of network indicators of a target cell in a first preset period.

Each network indicator includes a network quality indicator and a distance metrics.

Specifically, in a network system, TA is one of the important means for determining a coverage distance. A base station may determine a plurality of network indicators of the target cell through a plurality of pieces of measurement data reported by various terminals, and then the electronic device may acquire the plurality of pieces of measurement data through the base station. Since the measurement data may include information such as RSRP, RSRQ, SINR, TA, AOA, PCI, and latitude and longitude, the electronic device may determine the distance metrics through TA, and determine the network quality indicators through RSRP, RSRQ, SINR, and the like. In this way, the electronic device may determine a relationship between the network quality and the distance within a coverage range of the target cell through the distance metrics and the network quality indicators.

Optionally, a network quality indicator may be any one of the following: RSRP, RSRQ, and SINR. The RSRP may also be periodic RSRP and event-triggered RSRP. The RSRP may include a synchronization signal reference signal receiving power (SS-RSRP), a channel state information reference signal receiving power (CSI-RSRP), a uplink reference signal receiving power (SRS-RSRP), and the like, which is not limited to the embodiment of the present application.

Optionally, the measurement data may be MR (Measurement Report) data.

Optionally, the electronic device may further determine the distance metrics through the longitude and latitude in the MR data.

S302: Determine, by the electronic device, an average coverage distance of at least one preset network quality indicator range on the basis of network quality indicators and distance metrics in individual network indicators.

Specifically, the electronic device may determine, from a plurality of preset network quality indicator ranges, a preset network quality indicator range to which individual network quality indicators belong, and determine, on the basis of the network quality indicators, distance metrics in one-to-one correspondence with the network quality indicators. Then, the electronic device may determine at least one distance metrics that an individual preset network quality indicator range responds to, and determine an average coverage distance with respect to the preset network quality indicator range on the basis of the at least one distance metrics.

In this way, the electronic device can represent a distance metrics related to the network quality within the coverage range of the target cell by using the average coverage distance of each preset network quality indicator range, such that an operator can perform operations such as base station planning and network optimization by using the average coverage distance.

In a possible implementation, there is a correspondence relationship between the network quality indicator and the distance metrics in each network indicator. The correspondence relationship may be a one-to-one correspondence between the network quality indicator and the distance metrics in each network indicator. The average coverage distance of any one of the preset network quality indicator ranges is a ratio of a sum of at least one first product to a sum of at least one target network quality indicator. The first product is a product of a target network quality indicator and a corresponding distance metrics. The target network quality indicator is a network quality indicator in any one of the preset network quality indicator ranges.

Specifically, after determining the at least one distance metrics corresponding to the at least one network quality indicator in each preset network quality indicator range, the electronic device may determine a product of a target network quality indicator in a target preset network quality indicator range and a target distance metrics corresponding to the target network quality indicator as the first product. The target preset network quality indicator range is any one of the plurality of preset network quality indicator ranges, and the target network quality indicator is any one of at least one network quality indicator belonging to the target preset network quality indicator range. In this way, the electronic device can determine the ratio of the sum of the at least one first product corresponding to the at least one target network quality indicator to the sum of the at least one target network quality indicator as an average coverage distance of the target preset network quality indicator range.

In another possible implementation, there is a correspondence relationship between the network quality indicator and the distance metrics in each network indicator. The correspondence relationship may be a one-to-one correspondence between the network quality indicator and the distance metrics in each network indicator. The average coverage distance of any one of the preset network quality indicator ranges is an average value of at least one target distance metrics; and the target distance metrics is a distance metrics corresponding to the network quality indicator in any one of the preset network quality indicator ranges.

Specifically, after the electronic device acquires a plurality of network indicators, at least one preset network indicator range may be divided out of the plurality of network quality indicators. Then, the electronic device may determine the preset network quality indicator ranges corresponding to individual distance metrics according to the correspondence relationship between each distance metrics and each network quality indicator. Then, the electronic device may determine a plurality of distance metrics corresponding to an individual preset network quality indicator range, and determine an average value of the plurality of distance metrics as an average coverage distance corresponding to the preset network quality indicator range.

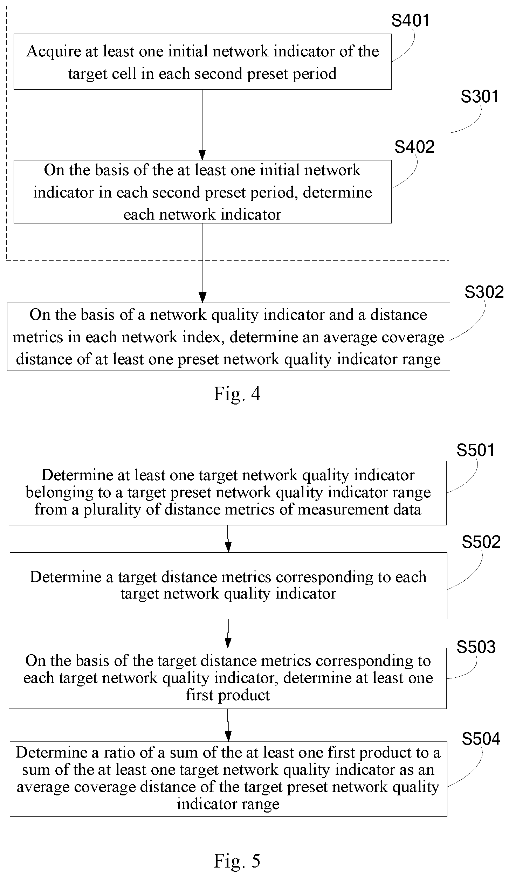

In some embodiments, with reference to Fig. 3, as shown in Fig. 4, the first preset period includes a plurality of second preset periods; and in the above S301, determining, by the electronic device, the plurality of network indicators of the target cell in the first preset period specifically includes:

S401: Acquiring, by the electronic device, at least one initial network indicator of the target cell in each of the second preset periods.

Specifically, when the network quality indicator and the distance metrics in the network indicator are being acquired, because the network quality indicator and the distance metrics cannot be acquired at the same time by the electronic device, the first preset period may thereby be divided into a plurality of second preset periods, and within each of the second preset periods, initial network quality indicators and initial distance metrics reported by individual terminals within a coverage range of the target cell are acquired.

S402: Determine, by the electronic device, individual network indicators on the basis of at least one initial network indicator within each of the second preset periods.

Specifically, the electronic device may acquire at least one initial network indicator in a second preset period. When at least one initial network indicator acquired in the second preset period is plural, the electronic device may determine an average value (or a median, a random one, or a sum) of the plurality of initial network indicators acquired in each second preset period as one network indicator corresponding to each second preset period.

Optionally, due to reasons such as network fluctuations, a terminal may send only the network quality indicator but no distance metrics in a second preset period. In this case, as the network indicator includes both the distance metrics and the network quality indicator, the electronic device may thus determine that the terminal does not send any network indicator in the second preset period.

In some embodiments, with reference to Fig. 4, as shown in Fig. 5, the operation for determining a distance related to average network quality of each preset distance metrics range specifically includes:

S501: Determine, among distance metrics in a plurality of pieces of measurement data by the electronic device, at least one target network quality indicator belonging to the target preset network quality indicator range.

S502: Determine, by the electronic device, a target distance metrics corresponding to each target network quality indicator, where the distance metrics and the network quality indicator in the same piece of measurement data correspond to each other.

S503: Determine, by the electronic device, at least one first product on the basis of the target distance metrics corresponding to each target network quality indicator, where the first product is a product of the target network quality indicator and the corresponding target distance metrics.

S504: Determine, by the electronic device, a ratio of a sum of the at least one first product to a sum of the at least one target network quality indicator as an average coverage distance of the target preset network quality indicator range.

In some embodiments, there may be a plurality of cases for the distance metrics. In the case that the distance metrics includes timing advance (TA), four cases of the distance metrics are as follows.

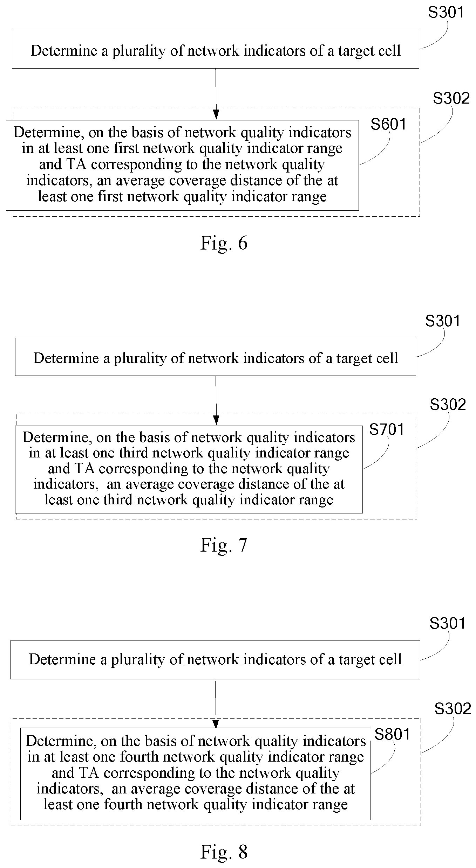

Case 1: the at least one preset network quality indicator range includes at least one preset first network quality indicator range. With reference to Fig. 3, as shown in Fig. 6, S601: the electronic device determines an average coverage distance of the at least one first network quality indicator range on the basis of the network quality indicators in the at least one first network quality indicator range and TA corresponding to the network quality indicators.

When the average coverage distance of any one of the preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_TA_{R_k} = \frac{\sum_i \sum_j (R_{i,j,k} \times TA_{i,j,k})}{\sum_i \sum_j R_{i,j,k}};$$

where $Mean\_TA_{R_k}$ is the average coverage distance of the $k$th first network quality indicator range; $TA_{i,j,k}$ is a distance metrics sent by a *j*th terminal in the *k*th first network quality indicator range in an *i*th second preset period; $R_{i,j,k}$ is a network quality indicator corresponding to the distance metrics sent by the *j*th terminal in the *k*th first network quality indicator range in the *i*th second preset period.

Specifically, as the distance metrics is determined through TA in MR data, the electronic device may determine that the distance metrics is TA. In this case, the electronic device can determine that the preset network quality indicator range is a preset first network quality indicator range. Then, the electronic device may determine an average coverage distance corresponding to each first network quality indicator range.

Alternatively, when the at least one preset network quality indicator range is at least one preset first network quality indicator range, the average coverage distance of the *k*th first network quality indicator range meets the following formula:

$$Mean\_TA_{R_k} = \frac{\sum_i \sum_j TA_{i,j,k}}{\sum_i \sum_j N_{i,j,k}};$$

where $Mean\_TA_{R_k}$ is the average coverage distance of the *k*th first network quality indicator range; $TA_{i,j,k}$ is the distance metrics sent by the *j*th terminal in the *k*th first network quality indicator range in the *i*th second preset period; and $N_{i,j,k}$ is the number of network indicators sent by the *j*th terminal in the *k*th first network quality indicator range in the *i*th second preset period, or $N_{i,j,k}$ is the number of the second preset periods in the first preset period.

Specifically, the electronic device may determine the first network quality indicator ranges as the preset network quality indicator ranges, and determine at least one distance metrics belonging to individual first network quality indicator ranges. Then, the electronic device may calculate an average value of at least one distance metrics corresponding to each first network quality indicator range, and determine the average value as the average coverage distance corresponding to the first network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of the network indicators sent by each terminal in each second preset period is 1. In addition, the electronic device may further determine the number of the second preset periods in the first preset period as the denominator, such that no matter whether the terminal sends the network indicators or not in the second preset periods, the number of the second preset periods remains unchanged.

For example, it is assumed that the electronic device acquires, within a preset time period T (i.e., the first preset period in the present application), a plurality of groups of MR data (i.e., the plurality of network indicators in the present application) reported by a plurality of terminals, where each group of MR data includes RSRP, TA, VAOA, and HAOA. Then, the electronic device may determine, from the plurality of groups of MR data, a *k*th first network quality indicator range to which $RSRP_x$ (i.e., the network quality indicator sent by the *j*th terminal in the *i*th second preset period in the present application) in the *x*th group of MR data (i.e., the network indicators sent by the *j*th terminal in the *i*th second preset period in the present application) belongs, and determine a distance metrics $TA_x$ corresponding to the $RSRP_x$. Then, the electronic device may determine the average coverage distance with respect to the *k*th first network quality indicator range through the following formula:

$$Mean\_TA_{RSRP_k} = \frac{\sum_{x,RSRP_{k\_Low} \ll RSRP_x \ll RSRP_{k\_High}} (RSRP_x \times TA_x)}{\sum_{x,RSRP_{k\_Low} \ll RSRP_x \ll RSRP_{k\_High}} RSRP_x};$$

where $Mean\_TA_{RSRP_k}$ represents the average coverage distance of the *k*th first network quality indicator range; $RSRP_x$ represents RSRP in the *x*th group of MR data in the *k*th first network quality indicator range; $TA_x$ represents TA in the *x*th group of MR data in the *k*th first network quality indicator range; $RSRP_{k\_Low} \ll RSRP_x \ll RSRP_{k\_High}$ represents that $RSRP_x$ is less than a minimum value of a *k*th first RSRP range (i.e., the first network quality indicator range in the present application) and greater than a maximum value of the *k*th first RSRP range, that is, $RSRP_x$ belongs to the *k*th first RSRP range.

In this way, $Mean\_TA_{RSRP_k}$ may represent a value of coverage distance when the network quality indicator is within a first network quality indicator range.

It should be noted that the electronic device may further determine an average coverage distance of at least one second network quality indicator range on the basis of AOA, a network quality indicator in the at least one second network quality indicator range, and TA corresponding to this network quality indicator.

When the average coverage distance of any one of the preset network quality indicator ranges is a ratio of a sum of at least one first product to a sum of at least one target network quality indicator, and the at least one preset network quality indicator range is at least one preset second network quality indicator range in each preset antenna azimuth AOA group, an average coverage distance of a $k$th second network quality indicator range in a $t$th AOA group meets the following formula:

$$Mean\_TA_{R_{k,t}} = \frac{\sum_i \ \sum_j (R_{i,j,k,t} \times TA_{i,j,k,t})}{\sum_i \ \sum_j \ R_{i,j,k,t}};$$

where $Mean\_TA_{R_{k,t}}$ is the average coverage distance of the $k$th second network quality indicator range in the $t$th AOA group; $TA_{i,j,k,t}$ is a distance metrics sent by a $j$th terminal in the $k$th second network quality indicator range in the $t$th AOA group in the $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Alternatively, when the average coverage distance of any one of the preset network quality indicator ranges is an average value of at least one target distance metrics, and the at least one preset network quality indicator range is at least one preset second network quality indicator range in each preset antenna azimuth AOA group, the average coverage distance of the $k$th second network quality indicator range in the $t$th AOA group meets the following formula:

$$Mean\_TA_{R_{k,t}} = \frac{\sum_i \ \sum_j TA_{i,j,k,t}}{\sum_i \ \sum_j \ N_{i,j,k,t}};$$

where $Mean\_TA_{R_{k,t}}$ is the average coverage distance of the $k$th second network quality indicator range in the $t$th AOA group; $TA_{i,j,k,t}$ is the distance metrics sent by the $j$th terminal in the $k$th second network quality indicator range in the $t$th AOA group in the $i$th second preset period; and $N_{i,j,k,t}$ is the number of network indicators sent by the $j$th terminal in the $k$th second network quality indicator range in the $t$th AOA group in the $i$th second preset period, or $N_{i,j,k,t}$ is the number of the second preset periods in the first preset period.

Specifically, the electronic device may determine the second network quality indicator range in each AOA group as the preset network quality indicator range, and determine at least one distance metrics belonging to each second network quality indicator range. Then, the electronic device may calculate an average value of at least one distance metrics corresponding to each second network quality indicator range, and determine the average value as the average coverage distance corresponding to the second network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of the network indicators sent by each terminal in a second preset period is 1. In addition, the electronic device may further determine the number of the second preset periods in the first preset period as the denominator, such that no matter whether the terminal sends the network indicators or not in the second preset periods, the number of the second preset periods remains unchanged.

The AOA group is any one of the following: an antenna horizontal azimuth HAOA group, an antenna vertical azimuth VAOA group, and a spatial coverage direction group, where the HAOA group is an azimuth angle group determined by dividing a horizontal coverage plane of the target cell; the VAOA group is an azimuth angle group determined by dividing a vertical coverage plane of the target cell; and the spatial coverage direction group is an azimuth angle group in which the VAOA group and the HAOA group coexist. At least one preset second network quality indicator range in each AOA group is:

at least one preset third network quality indicator range in each HAOA group; or at least one preset fourth network quality indicator range in each VAOA group; or at least one preset fifth network quality indicator range in each spatial coverage direction group, which involve Case 2 to Case 4, respectively.

Case 2: the at least one preset distance metrics range is at least one preset third network quality indicator range in each antenna horizontal azimuth HAOA group. With reference to Fig. 3, as shown in Fig. 7, S701: the electronic device determines an average coverage distance of the at least one third network quality indicator range on the basis of network quality indicators in the at least one third network quality indicator range and TA corresponding to the network quality indicators. The HAOA group is an azimuth angle group determined by dividing the horizontal coverage plane of the target cell.

When the average coverage distance of any one of the preset network quality indicator ranges is a ratio of a sum of at least one first product to a sum of at least one target network quality indicator, and the at least one preset network quality indicator range is at least one preset third network quality indicator range in each preset HAOA group, an average coverage distance of a $k$th third network quality indicator range in an $m$th HAOA group meets the following formula:

$$Mean\_TA_{R_{k,m}} = \frac{\sum_i \sum_j (R_{i,j,k,m} \times TA_{i,j,k,m})}{\sum_i \sum_j R_{i,j,k,m}};$$

where $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

Specifically, because the distance metrics is determined through the TA in the MR data, the electronic device may determine the distance metrics through the HAOA and the TA in the MR data. As the HAOA is an estimated angle of a terminal relative to the reference direction (i.e., the antenna azimuth) being of a horizontal direction, the electronic device may divide the antenna horizontal azimuth (i.e., a horizontal coverage plane) into a plurality of antenna horizontal azimuth groups, and represent the antenna horizontal azimuth groups through the HAOA. In this case, the electronic device can determine that the preset network quality indicator range includes a preset third network quality indicator range in each HAOA group. Then, the electronic device may determine, by using each HAOA, HAOA groups to which individual HAOAs belong, i.e., horizontal azimuth groups to which individual terminals belong. Then, the electronic device may determine a HAOA group to which each HAOA belongs, and determine a third network quality indicator range to which network quality indicators corresponding to individual HAOAs in the HAOA group belongs. Then, the electronic device may determine the average coverage distance of the preset network quality indicator range on the basis of the network quality indicators in the third network quality indicator range in each HAOA group and the distance metrics corresponding thereto.

Alternatively, when the average coverage distance of any one of the preset network quality indicator ranges is an average value of at least one target distance metrics, and the at least one preset network quality indicator range is at least one preset third network quality indicator range in each preset HAOA group, the average coverage distance of the $k$th third network quality indicator range in the $m$th HAOA group meets the following formula:

$$Mean\_TA_{R_{k,m}} = \frac{\sum_i \sum_j TA_{i,j,k,m}}{\sum_i \sum_j N_{i,j,k,m}};$$

where $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in the $i$th second preset period; and $N_{i,j,k,m}$ is the number of network indicators sent by the $j$th terminal in the $k$th third network quality indicator range in the $m$th HAOA group in the $i$th second preset period, or $N_{i,j,k,m}$ is the number of the second preset periods in the first preset period.

Specifically, the electronic device may determine the third network quality indicator ranges in each HAOA group as the preset network quality indicator ranges, and determine at least one distance metrics belonging to each third network quality indicator range. Then, the electronic device may calculate an average value of at least one distance metrics corresponding to each third network quality indicator range, and determine the average value as the average coverage distance corresponding to the third network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of the network indicators sent by each terminal in each second preset period is 1. In addition, the electronic device may further determine the number of the second preset periods in the first preset period as the denominator, such that no matter whether the terminal sends the network indicators or not in the second preset periods, the number of the second preset periods remains unchanged.

Optionally, the electronic device may determine a third network quality indicator range to which each network quality indicator belongs, and then determine a HAOA group to which each network quality indicator in the third network quality indicator range belongs, which is not limited to the embodiment of the present application.

For example, it is assumed that the electronic device acquires, within a preset time period T, a plurality of groups of MR data (i.e., the plurality of network indicators in the present application) reported by a plurality of terminals, where each group of MR data includes RSRP, TA, VAOA, and HAOA. Then, the electronic device may determine, from the plurality of groups of MR data, a $k$th third network quality indicator range to which $RSRP_x$ (i.e., the network quality indicator sent by the $j$th terminal in the $i$th second preset period in the present application) in the $x$th group of MR data (i.e., the network indicators sent by the $j$th terminal in the $i$th second preset period in the present application) belongs, and determine $HAOA_x$ corresponding to the $RSRP_x$. Then, the electronic device may determine the $m$th HAOA group to which the $HAOA_x$ belongs among M HAOA groups. Then, the electronic device may determine the average coverage distance with respect to the $k$th third network quality indicator range in the $m$th HAOA group through the following formula:

$$Mean\_TA_{RSRP_{k},M_{m}} = \frac{\sum_{x,(RSRP_{k\_Low} \ll RSRP_{x} \ll RSRP_{k_{High}})\&(HAOA_{x} \in M_{m})}(RSRP_{x} \times TA_{x})}{\sum_{x,((RSRP_{k\_Low} \ll RSRP_{x} \ll RSRP_{k_{High}})\&(HAOA_{x} \in M_{m})}RSRP_{x}};$$

where $Mean\_TA_{RSRP_{k},M_{m}}$ represents the average coverage distance of the $k$th third network quality indicator range in the $m$th HAOA group; $RSRP_{x}$ represents RSRP in the $x$th group of MR data in the $k$th third RSRP range in the $m$th HAOA group; $TA_{x}$ represents TA in the $x$th group of MR data in the $k$th third RSRP range in the $m$th HAOA group; ($RSRP_{k\_Low} \ll RSRP_{x} \ll$ $RSRP_{k_{High}}$ represents that $RSRP_{x}$ is less than a minimum value of the $k$th third RSRP range and greater than a maximum value of the $k$th third RSRP range, that is, $RSRP_{x}$ belongs to the $k$th third RSRP range; and $HAOA_{x} \in M_{m}$ represents $HAOA_{x}$ belonging to the $m$th HAOA group.

In this way, $Mean\_TA_{RSRP_{k},M_{m}}$ may represent a value of coverage distance when the network quality indicator is within a third network quality range in each HAOA group.

Case 3: the at least one preset distance metrics range is at least one preset fourth network quality indicator range in each antenna vertical azimuth VAOA group. With reference to Fig. 3, as shown in Fig. 8, S801: the electronic device determines an average coverage distance of at least one fourth network quality indicator range on the basis of network quality indicators in the at least one fourth network quality indicator range and TA corresponding to the network quality indicators. The VAOA group is an azimuth angle group determined by dividing the vertical coverage plane of the target cell.

When the average coverage distance of any one of the preset network quality indicator ranges is a ratio of a sum of at least one first product to a sum of at least one target network quality indicator, and the at least one preset network quality indicator range is at least one preset fourth network quality indicator range in each VAOA group, an average coverage distance of a $k$th fourth network quality indicator range in an $n$th VAOA group meets the following formula:

$$Mean\_TA_{R_{k,n}} = \frac{\sum_{i} \sum_{j}(R_{i,j,k,n} \times HTA_{i,j,k,n})}{\sum_{i} \sum_{j} R_{i,j,k,n}};$$

where $Mean\_TA_{R_{k,n}}$ is the average coverage distance of the $k$th fourth network quality indicator range in the $n$th VAOA group; $TA_{i,j,k,n}$ is a distance metrics sent by a $j$th terminal in the $k$th fourth network quality indicator range in the $n$th VAOA group in the $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Specifically, because the distance metrics is determined through the TA in the MR data, the electronic device may determine the distance metrics through the VAOA and the TA in the MR data. As the VAOA is an estimated angle of a terminal relative to the reference direction (i.e., the antenna azimuth) being of a vertical direction, the electronic device may divide the antenna vertical azimuth (i.e., a vertical coverage plane) into a plurality of antenna vertical azimuth groups, and represent the antenna vertical azimuth groups through the VAOA. In this case, the electronic device may determine that the preset network quality indicator range includes a preset fourth network quality indicator range in each VAOA group. Then, the electronic device may determine, by using each VAOA, VAOA groups to which individual VAOAs belong, i.e., vertical azimuth groups to which individual terminals belong. Then, the electronic device may determine a VAOA group to which each VAOA belongs, and determine a fourth network quality indicator range to which network quality indicators corresponding to individual VAOAs in the VAOA group belong. Then, the electronic device may determine the average coverage distance of the preset network quality indicator range on the basis of the network quality indicators in the fourth network quality indicator range in each VAOA group and their related network quality.

Alternatively, when the average coverage distance of any one of the preset network quality indicator ranges is an average value of at least one target distance metrics, and the at least one preset network quality indicator range is at least one preset fourth network quality indicator range in each preset VAOA group, the average coverage distance of the $k$th fourth network quality indicator range in the $n$th VAOA group meets the following formula:

$$Mean\_TA_{R_{k,n}} = \frac{\sum_{i} \sum_{j} TA_{i,j,k,n}}{\sum_{i} \sum_{j} N_{i,j,k,n}};$$

Where $Mean\_TA_{R_{k,n}}$ is the average coverage distance of the $k$th fourth network quality indicator range in the $n$th VAOA group; $TA_{i,j,k,t}$ is a distance metrics sent by a $j$th terminal in the $k$th fourth network quality indicator range in the $n$th VAOA group in the $i$th second preset period; and $R_{i,j,k,n}$ is the number of network indicators sent by the $j$th terminal in the $k$th fourth network quality indicator range in the $n$th VAOA group in the $i$th second preset period, or $N_{i,j,k,n}$ is the number of the second preset periods in the first preset period.

Specifically, the electronic device may determine the fourth network quality indicator ranges in each VAOA group as the preset network quality indicator ranges, and determine at least one distance metrics belonging to each fourth network quality indicator range. Then, the electronic device may calculate an average value of at least one distance metrics corresponding to each fourth network quality indicator range, and determine the average value as the average coverage distance corresponding to the fourth network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of the network indicators sent by each terminal in each second preset period is 1. In addition, the electronic device may further determine the number of the second preset periods in the first preset period as the denominator, such that no matter whether the terminal sends the network indicators or not in the second preset periods, the number of the second preset periods remains unchanged.

Optionally, the electronic device may determine a fourth network quality indicator range to which each network quality indicator belongs, and then determine a VAOA group to which each network quality indicator in the fourth network quality indicator range belongs, which is not limited to the embodiment of the present application.

For example, it is assumed that the electronic device acquires, within a preset time period T, a plurality of groups of MR data (i.e., the plurality of network indicators in the present application) reported by a plurality of terminals, where each group of MR data includes RSRP, TA, VAOA, and VAOA. Then, the electronic device may determine, from the plurality of groups of MR data, a $k$th fourth RSRP range in at least one fourth RSRP range (i.e., the fourth network quality indicator range in the present application) to which $RSRP_x$ (i.e., the network quality indicator sent by the $j$th terminal in the $i$th second preset period in the present application) in the $x$th group of MR data (i.e., the network indicators sent by the $j$th terminal in the $i$th second preset period in the present application) belongs, and determine $VAOA_x$ corresponding to the network quality indicator $RSRP_x$. Then, the electronic device may determine an $m$th VAOA group to which the $VAOA_x$ belongs among the M VAOA groups. Then, the electronic device may determine the average coverage distance with respect to the $k$th fourth RSRP range in the $m$th VAOA group through the following formula:

$$Mean\_TA_{RSRP_k,M_m} = \frac{\sum_{x,(RSRP_{k\_Low} \ll RSRP_x \ll RSRP_{k_{High}})\&(VAOA_x \in M_m)}(RSRP_x \times TA_x)}{\sum_{x,(RSRP_{k\_Low} \ll RSRP_x \ll RSRP_{k_{High}})\&(VAOA_x \in M_m)} RSRP_x};$$

where $Mean\_TA_{RSRP_k,M_m}$ represents the average coverage distance with respect to the $k$th fourth RSRP range in the $m$th VAOA group; $RSRP_x$ represents the RSRP in the $x$th group of MR data in the $k$th fourth RSRP range in the $m$th VAOA group; $TA_x$ represents TA in the $x$th group of MR data in the $k$th fourth RSRP range in the $m$th VAOA group; $RSRP_{k\_Low} \ll RSRP_i \ll RSRP_{k_{High}}$ represents that $RSRP_x$ is less than a minimum value of the $k$th fourth RSRP range and greater than a maximum value of the $k$th fourth RSRP range, that is, $RSRP_x$ belongs to the $k$th fourth RSRP range, and $VAOA_x \in M_m$ represents that $VAOA_x$ belongs to the $m$th VAOA group.

In this way, $Mean\_TA_{RSRP_k,M_m}$ may represent a value of coverage distance when the network quality indicator is within the fourth network quality range in each VAOA group.

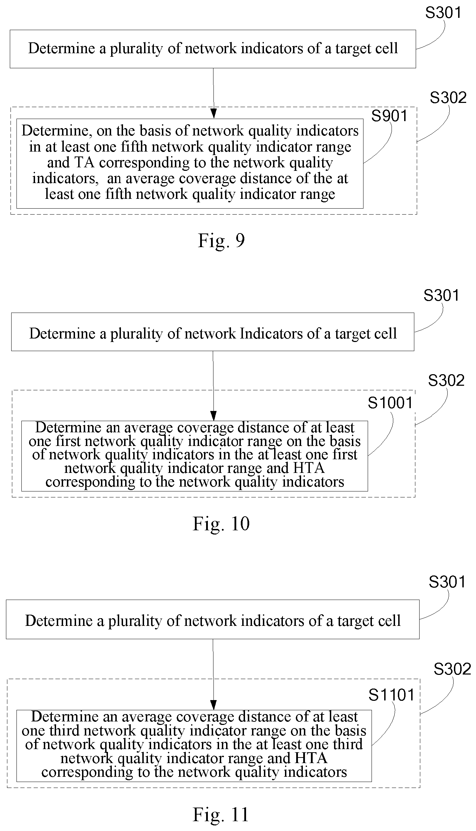

Case 4: the at least one preset distance metrics range is at least one preset fifth network quality indicator range in each spatial coverage direction group. With reference to Fig. 3, as shown in Fig. 9, S901: the electronic device determines an average coverage distance of the at least one fifth network quality indicator range on the basis of network quality indicators in the at least one fifth network quality indicator range and TA corresponding to the network quality indicators. The spatial coverage direction group is a direction angle group in which a VAOA group and a HAOA group coexist.

When the average coverage distance of any one of the preset network quality indicator ranges is a ratio of a sum of at least one first product to a sum of at least one target network quality indicator, and the at least one preset network quality indicator range is at least one preset fifth network quality indicator range in each spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

where $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by a jth terminal in the $k$th fifth network quality indicator range in the $h$th spatial coverage direction group in the $i$th second preset period; and $R_{i,j,k,h}$ is a network quality indicator corresponding to the distance metrics sent by the jth terminal in the $k$th fifth network quality indicator range in the $h$th spatial coverage direction group in the $i$th second preset period.

Specifically, because the distance metrics is determined on the basis of the TA in the MR data, the electronic device may determine the distance metrics on the basis of the VAOA, the HAOA, and the TA in the MR data. As the VAOA is an estimated angle of a terminal relative to the reference direction (i.e., the antenna azimuth) being of a vertical direction and the HAOA is an estimated angle of the terminal relative to the reference direction (i.e., the antenna azimuth) being of a horizontal direction, the electronic device may divide the antenna vertical azimuth (i.e., the vertical coverage plane) into a plurality of antenna vertical azimuth groups and represent the antenna vertical azimuth groups through the VAOA, and further divide the antenna horizontal azimuth (i.e., the horizontal coverage plane) into a plurality of antenna horizontal azimuth groups and represent the antenna horizontal azimuth groups through the HAOA.

In this case, the electronic device can determine that the preset network quality indicator range is a fifth network quality indicator range in each preset spatial coverage direction group. Then, the electronic device may determine, by using each VAOA, VAOA groups to which individual VAOAs belong, that is, vertical azimuth groups to which individual terminals belong, determine, by using each HAOA, HAOA groups to which individual HAOAs belong, and determine coexistence of a HAOA group and a VAOA group as a spatial coverage direction group. Then, the electronic device may determine the fifth network quality indicator range to which the network quality indicator corresponding to each VAOA (or HAOA) in the spatial coverage direction group belongs. Then, the electronic device may determine an average coverage distance of the preset network quality indicator range on the basis of the network quality indicators in the fifth network quality indicator range and their corresponding distance metrics.

Alternatively, when the average coverage distance of any one of the preset network quality indicator ranges is an average value of at least one target distance metrics, and the at least one preset network quality indicator range is at least one fifth network quality indicator range in each preset spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

wherein, $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by a $j$th terminal in the $k$th fifth network quality indicator range in the $h$th spatial coverage direction group in the $i$th second preset period; and $R_{i,j,k,h}$ is the number of network indicators sent by the $j$th terminal in the $k$th fifth network quality indicator range in the $h$th spatial coverage direction group in the $i$th second preset period, or $R_{i,j,k,h}$ is the number of second preset periods in the first preset period.

Specifically, the electronic device may determine the fifth network quality indicator range in each spatial coverage direction group as the preset network quality indicator range, and determine at least one distance metrics belonging to each fifth network quality indicator range. Then, the electronic device may calculate an average value of at least one distance metrics corresponding to each fifth network quality indicator range, and determine the average value as the average coverage distance corresponding to the fifth network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of network indicators sent by each terminal in each second preset period is 1. In addition, the electronic device may further determine the number of second preset periods in the first preset period as the denominator, so that no matter whether the terminal sends the network indicator or not in the second preset periods, the number of second preset periods does not change.

For example, it is assumed that the electronic device acquires, in a preset time period T, a plurality of groups of MR data (that is, the plurality of network indicators in the present application) reported by a plurality of terminals, where each group of MR data includes RSRP, TA, VAOA, and VAOA. Then, the electronic device may determine a $k$th fifth RSRP range in at least one fifth RSRP range (that is, the fifth network quality indicator range in the present application) to which RSRP$_x$ (that is, the network quality indicator sent by the $j$th terminal in the $i$th second preset period in the present application) in the $x$th group of MR data (that is, the network indicators sent by the $j$th terminal in the $i$th second preset period in the present application) belongs, and determine HAOA$_x$ and VAOA$_x$ corresponding to the RSRP$_x$. Next, the electronic device may determine an $m$th VAOA group to which the VAOA$_x$ belongs among M VAOA groups and an $n$th HAOA group to which the HAOA$_x$ belongs among the M HAOA groups. Then, the electronic device may determine an average coverage distance with respect to the $k$th fifth RSRP range in a corresponding spatial coverage direction group of the $m$th VAOA group and the $n$th HAOA group by the following formula:

$$Mean\_TA_{RSRP_{k,N_n,M_m}} = \frac{\sum_{x,(RSRP_{k\_Low} \ll RSRP_x \ll RSRP_{k_{High}}) \& (VAOA_x \in M_m) \& (HAOA_x \in N_n)} (RSRP_x \times TA_x)}{\sum_{x,(RSRP_{k\_Low} \ll RSRP_x \ll RSRP_{k_{High}}) \& (VAOA_x \in M_m) \& (HAOA_x \in N_n)} RSRP_x};$$

wherein, $Mean\_TA_{RSRP_{k,N_n,M_m}}$ represents the average coverage distance with respect to the $k$th fifth RSRP range in the corresponding spatial coverage direction group of the $m$th VAOA group and the $n$th HAOA group; $RSRP_x$ represents RSRP in the $x$th group of MR data in the $k$th fifth RSRP range in the corresponding spatial coverage direction group of the $m$th VAOA group and the $n$th HAOA group; $TA_x$ represents TA in the $x$th group of MR data in the $k$th fifth RSRP range in the corresponding spatial coverage direction group of the $m$th VAOA group and the $n$th HAOA group; $RSRP_{h\_Low} \ll RSRP_x \ll RSRP_{kHigh}$ represents that $TA_x$ is less than a minimum value the $k$th fifth RSRP range and greater than a maximum value the $k$th fifth RSRP range, that is, $TA_x$ belongs to the $k$th fifth RSRP range; $VAOA_x \in M_m$ represents that $VAOA_x \in M_m$ belongs to the $m$th VAOA group; and $HAOA_x \in N_n$ represents $HAOA_x$ belongs to the $n$th HAOA group.

In this way, a value of coverage distance when the network quality indicator is within the fifth network quality range in each spatial coverage direction group may be represented by $Mean\_TA_{RSRP_{k,N_n,M_m}}$.

In some embodiments, the distance metrics may also be the following four cases. When the distance metrics is a timing advance in the horizontal direction, HTA, the HTA is determined on the basis of the TA, the VAOA, and an antenna mechanical downtilt angle of the target cell. The four cases of the distance metrics are as follows.

It should be understood that a method for determining the HTA by the electronic device is: $HTA = TA * COS(VAOA + Angle)$, wherein the $Angle$ is the antenna mechanical downtilt angle of the cell.

Case 1: the at least one preset network quality indicator range is at least one preset first network quality indicator range. With reference to Fig. 3, and as shown in Fig. 10, at S1001, the electronic device determines an average coverage distance of the at least one first network quality indicator range on the basis of the network quality indicators in the at least one first network quality indicator range and HTA corresponding to the network quality indicators.

When the average coverage distance of any one of preset network quality indicator ranges is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j (R_{i,j,k} \times HTA_{i,j,k})}{\sum_i \sum_j R_{i,j,k}};$$

wherein, $Mean\_HTA_{R_k}$ is the average coverage distance of the $k$th first network quality indicator range; $HTA_{i,j,k}$ is a distance metrics sent by a $j$th terminal in the $k$th first network quality indicator range in the $i$th second preset period; and $R_{i,j,k}$ is a network quality indicator corresponding to the distance metrics sent by the $j$th terminal in the $k$th first network quality indicator range in the $i$th second preset period.

Specifically, as the distance metrics is determined by the HTA in the MR data, the electronic device may determine that the distance metrics includes the HTA. In this case, the electronic device can determine that the preset network quality indicator range includes the preset first network quality indicator range. Then, the electronic device may determine an average coverage distance corresponding to each first network quality indicator range.

Alternatively, when the average coverage distance of any one of preset network quality indicator ranges is an average value of at least one target distance metrics, and the at least one preset network quality indicator range is at least one preset first network quality indicator range, an average coverage distance of the $k$th first network quality indicator range meets the following formula:

$$Mean\_HTA_{R_k} = \frac{\sum_i \sum_j HTA_{i,j,k}}{\sum_i \sum_j N_{i,j,k}};$$

wherein, $Mean\_HTA_{R_k}$ is the average coverage distance of the $k$th first network quality indicator range; $Mean\_HTA_{R_k}$ is a distance metrics sent by the $j$th terminal in the $k$th first network quality indicator range in the $i$th second preset period; and the $N_{i,j,k}$ is the number of network indicators sent by the $j$th terminal in the $k$th first network quality indicator range in the $i$th second preset period, or the $N_{i,j,k}$ is the number of second preset periods in the first preset period.

Specifically, the electronic device may determine the first network quality indicator range as the preset network quality indicator range, and determine at least one distance metrics belonging to individual first network quality indicator ranges. Then, the electronic device may calculate an average value of at least one distance metrics corresponding to each first network quality indicator range, and determine the average value as the average coverage distance corresponding to the first network quality indicator range.

It should be understood that when determining the average value, the electronic device may use the number of network indicators sent by each terminal in each second preset period as the denominator. Because the electronic device determines the at least one initial network indicator as one network indicator in the second preset period, the number of network indicators sent by each terminal in each second preset period is 1. In addition, the electronic device may further determine the number of second preset periods in the first preset period as the denominator, so that no matter whether the terminal sends the network indicator or not in the second preset periods, the number of second preset periods does not change.

For example, it is assumed that the electronic device acquires, in a preset time period T, a plurality of groups of MR data (that is, the plurality of network indicators in the present application) reported by a plurality of terminals, where each group of MR data includes RSRP, HTA, VAOA, and HAOA. Then, the electronic device may determine, from the plurality of groups of MR data, a $k$th first RSRP range in at least one first RSRP range (i.e., the first network quality indicator range in the present application) to which $RSRP_x$ (i.e., the network quality indicator sent by the $j$th terminal in the $i$th second preset period in the present application) in the $x$th group of MR data (i.e., the network indicators sent by the $j$th terminal in the $i$th second preset period in the present application) belongs, and determine a distance metrics $HTA_x$ corresponding to the $RSRP_x$. Then, the electronic device may determine an average coverage distance with respect to the $k$th first RSRP range by the following formula:

$$Mean\_HTA_{RSRP_k} = \frac{\sum_{x,RSRP_{k\_Low} \ll RSRP_x \ll RSRP_{k\_High}} (RSRP_x \times HTA_x)}{\sum_{x,RSRP_{k\_Low} \ll RSRP_x \ll RSRP_{k\_High}} RSRP_x};$$

wherein, $Mean\_HTA_{RSRP_k}$ represents the average coverage distance of the $k$th first RSRP range of the at least one first RSRP range; $RSRP_x$ represents RSRP in the $x$th group of MR data in the $k$th first RSRP range; $HTA_x$ represents HTA in the $x$th group of MR data in the $k$th first RSRP range; and the $RSRP_{k\_Low} \ll RSRP_x \ll RSRP_{k\_High}$ represents that the $RSRP_x$ is less than a minimum value of the $k$th first RSRP range and greater than a maximum value of the $k$th first RSRP range, that is, the $RSRP_x$ belongs to the $k$th first RSRP range.

In this way, a value of coverage distance in the horizontal direction when the network quality indicator is within the first network quality range may be represented by $Mean\_HTA_{RSRPk}$.

It should be noted that the electronic device may further determine an average coverage distance of the at least one second network quality indicator range on the basis of the AOA, a network quality indicator in the at least one second network quality indicator range, and HTA corresponding to this network quality indicator.

When the average coverage distance of any preset network quality indicator range is a ratio of a sum of at least one first product to a sum of at least one target network quality indicator, and the at least one preset network quality indicator range is at least one second network quality indicator range in each preset antenna azimuth AOA group, an average coverage distance of a $k$th second network quality indicator range in a $t$th AOA group meets the following formula:

$$Mean\_HTA_{R_{k,t}} = \frac{\sum_i \sum_j (R_{i,j,k,t} \times HTA_{i,j,k,t})}{\sum_i \sum_j R_{i,j,k,t}};$$

wherein, $Mean\_HTA_{R_{k,t}}$ is the average coverage distance of the $k$th second network quality indicator range in the $t$th AOA group; $HTA_{i,j,k,t}$ is a distance metrics sent by a $j$th terminal in the $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Alternatively, when the average coverage distance of any preset network quality indicator range is an average value of at least one target distance metrics, and the at least one preset network quality indicator range is at least one second network quality indicator range in each preset antenna azimuth AOA group, an average coverage distance of the $k$th second network quality indicator range in the $t$th AOA group meets the following formula:

$$Mean\_HTA_{R_{k,t}} = \frac{\sum_i \sum_j HTA_{i,j,k,t}}{\sum_i \sum_j N_{i,j,k,t}};$$

wherein, $Mean\_HTA_{R_{k,t}}$ is the average coverage distance of the $k$th second network quality indicator range in the $t$th AOA group; $HTA_{i,j,k,t}$ is a distance metrics sent by the $j$th terminal in the $k$th second network quality indicator range in the $t$th AOA group in the $i$th second preset period; and the $N_{i,j,k,t}$ is the number of network indicators sent by the $j$th terminal in the $k$th second network quality indicator range in the $t$th AOA group in the $i$th second preset period, or the $N_{i,j,k,t}$ is the number of second preset periods in the first preset period.

Specifically, the electronic device may determine the second network quality indicator range in each antenna azimuth AOA group as the preset network quality indicator range, and determine at least one distance metrics belonging to each second network quality indicator range. Then, the electronic device may calculate an average value of at least one distance metrics corresponding to each second network quality indicator range, and determine the average value as the average coverage distance corresponding to the second network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of network indicators sent by each terminal in each second preset period is 1. In addition, the electronic device may further determine the number of second preset periods in the first preset period as the denominator, so that no matter whether the terminal sends the network indicator or not in the second preset periods, the number of second preset periods does not change.

The AOA group is any one of the following: an antenna horizontal azimuth HAOA group, an antenna vertical azimuth VAOA group, and a spatial coverage direction group; the HAOA group is an azimuth angle group determined by dividing a horizontal coverage plane of the target cell; the VAOA group is an azimuth angle group determined by dividing a vertical coverage plane of the target cell; the spatial coverage direction group is an azimuth angle group in which the VAOA group and the HAOA group coexist. At least one second network quality indicator range in each preset AOA group is: at least one third network quality indicator range in each preset HAOA group; or, at least one fourth network quality indicator range in each preset VAOA group; or, at least one fifth network quality indicator range in each preset spatial coverage direction group, which are Case 2 to Case 4, respectively.

Case 2: the at least one preset distance metrics range is at least one third network quality indicator range in each preset antenna horizontal azimuth HAOA group. With reference to Fig. 3, and as shown in Fig. 11, at S1101, the electronic device determines an average coverage distance of the at least one third network quality indicator range on the basis of network quality indicators in the at least one third network quality indicator range and HTA corresponding to the network quality indicators. The HAOA group is an azimuth angle group determined by dividing the horizontal coverage plane of the target cell.

When the average coverage distance of any preset network quality indicator range is a ratio of a sum of at least one first product to a sum of at least one target network quality indicator, and the at least one preset network quality indicator range is at least one third network quality indicator range in each preset HAOA group, an average coverage distance of a $k$th third network quality indicator range in an $m$th HAOA group meets the following formula:

$$Mean\_HTA_{R_{k,m}} = \frac{\sum_i \sum_j (R_{i,j,k,m} \times HTA_{i,j,k,m})}{\sum_i \sum_j R_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in the $i$th second preset period; and $R_{i,j,k,m}$ is a network quality indicator corresponding to the distance metrics sent by the $j$th terminal in the $k$th third network quality indicator range in the $m$th HAOA group with in the $i$th second preset period.

Specifically, because the distance metrics is determined by the HTA in the MR data, the electronic device may determine the distance metrics by the HAOA and the HTA in the MR data. As the HAOA is an estimated angle of a terminal relative to the reference direction (i.e., the antenna azimuth) being of a horizontal direction, the electronic device may divide the antenna horizontal azimuth (that is, a horizontal coverage plane) into a plurality of antenna horizontal azimuth groups, and represent the antenna horizontal azimuth groups by using the HAOA. In this case, the electronic device can determine that the preset network quality indicator range includes a third network quality indicator range in each preset HAOA group. Then, the electronic device may determine, by using each HAOA, HAOA groups to which individual HAOAs belong, that is, horizontal azimuth groups to which individual terminals belong. Then, the electronic device may determine a HAOA group to which each HAOA belongs, and determine a third network quality indicator range to which the network quality indicators corresponding to individual HAOAs in the HAOA group belongs. Then, the electronic device may determine an average coverage distance of the preset network quality indicator range on the basis of the network quality indicators in the third network quality indicator range in each HAOA group and their corresponding distance metrics.

Alternatively, when the average coverage distance of any preset network quality indicator range is an average value of at least one target distance metrics, and the at least one preset network quality indicator range is at least one third network quality indicator range in each preset HAOA group, an average coverage distance of a $k$th third network quality indicator range in an $m$th HAOA group meets the following formula:

$$Mean\_HTA_{R_{k,m}} = \frac{\sum_i \sum_j HTA_{i,j,k,m}}{\sum_i \sum_j N_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by the $j$th terminal in the $k$th third network quality indicator range in the $m$th HAOA group in the $i$th second preset period; and the $N_{i,j,k,m}$ is the number of network indicators sent by the $j$th terminal in the $k$th third network quality indicator range in the $m$th HAOA group in the $i$th second preset period, or the $N_{i,j,k,m}$ is a number of second preset periods in the first preset period.

Specifically, the electronic device may determine the third network quality indicator range in each HAOA group as the preset network quality indicator range, and determine at least one distance metrics belonging to each third network quality indicator range. Then, the electronic device may calculate an average value of at least one distance metrics corresponding to each third network quality indicator range, and determine the average value as the average coverage distance corresponding to the third network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of network indicators sent by each terminal in each second preset period is 1. In addition, the electronic device may further determine the number of second preset periods in the first preset period as the denominator, so that no matter whether the terminal sends the network indicator or not in the second preset period, the number of second preset periods does not change.

Optionally, the electronic device may determine a third network quality indicator range to which each network quality indicator belongs, and then determine a HAOA group to which each network quality indicator in the third network quality indicator range belongs, which is not limited to the embodiment of the present application.

For example, it is assumed that the electronic device acquires, in a preset time period T, a plurality of groups of MR data (that is, the plurality of network indicators in the present application) reported by a plurality of terminals, where each group of MR data includes RSRP, HTA, VAOA, and HAOA. Then, the electronic device may determine, from the plurality of MR data, a $k$th third RSRP range in at least one third RSRP range to which $RSRP_x$ (that is, the network quality indicator sent by the $j$th terminal in the $i$th second preset period in the present application) in the $x$th group of MR data (that is, the network quality indicators sent by the $j$th terminal in the $i$th second preset period in the present application) belongs, and determine $HAOA_x$ corresponding to the $RSRP_x$. Next, the electronic device may determine the $m$th HAOA group to which the $HAOA_x$ belongs among M HAOA groups. Then, the electronic device may determine the average coverage distance with respect to the $k$th third RSRP range in the $m$th HAOA group by the following formula:

$$Mean\_HTA_{RSRP_{k},M_m} = \frac{\sum_{x,(RSRP_{k\_Low} \ll RSRP_x \ll RSRP_{k_{High}}) \& (HAOA_x \in M_m)}(RSRP_x \times HTA_x)}{\sum_{x,((RSRP_{k\_Low} \ll RSRP_x \ll RSRP_{k_{High}}) \& (HAOA_x \in M_m)}RSRP_x};$$

wherein, $Mean\_HTA_{RSRP_{k},M_m}$ represents the average coverage distance with respect to the $k$th third RSRP range in the $m$th HAOA group; $Mean\_HTA_{R_{k},M_m}$ represents RSRP in the $x$th group of MR data in the $k$th third RSRP range in the $m$th HAOA group; $HTA_x$ represents HTA in the $x$th group of MR data in the $k$th third RSRP range in the $m$th HAOA group; $RSRP_{k\_Low} \ll RSRP_x \ll RSRP_{kHigh}$ represents that the $RSRP_x$ is less than a minimum value of the $k$th third RSRP range and greater than a maximum value of the $k$th third RSRP range, that is, the $RSRP_x$ belongs to the $k$th third RSRP range; and the $HAOA_x \in M_m$ represents that $HAOA_x$ belongs to the $m$th HAOA group.

In this way, a value of coverage distance in the horizontal direction when the network quality indicator is within a third network quality range in each HAOA group may be represented by $Mean\_hTA_{RSRP_{k},M_m}$.

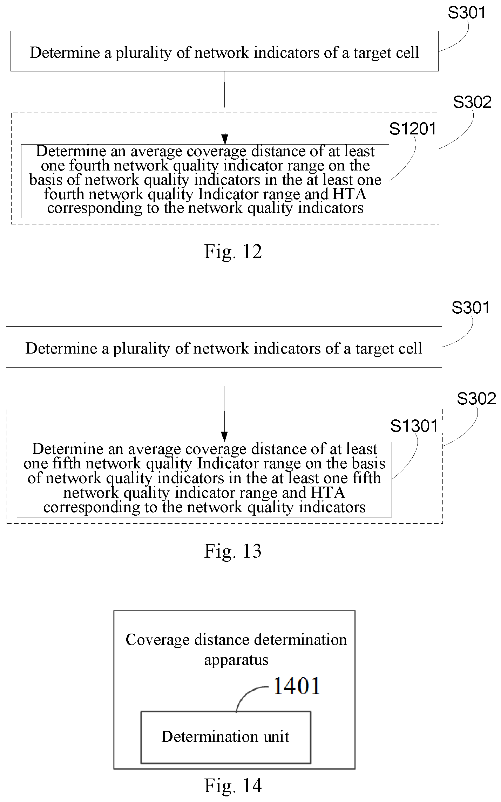

Case 3: the at least one preset distance metrics range is at least one fourth network quality indicator range in each preset antenna vertical azimuth VAOA group. With reference to Fig. 3, and as shown in Fig. 12, at S1201, the electronic device determines an average coverage distance of the at least one fourth network quality indicator range on the basis of network quality indicators in the at least one fourth network quality indicator range and HTA corresponding to the network quality indicators. The VAOA group is an azimuth angle group determined by dividing the vertical coverage plane of the target cell.

When the average coverage distance of any preset network quality indicator range is a ratio of a sum of at least one first product to a sum of at least one target network quality indicator, and the at least one preset network quality indicator range is at least one fourth network quality indicator range in each preset VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

wherein, $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in the $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Specifically, because the distance metrics is determined by the HTA in the MR data, the electronic device may determine the distance metrics by the VAOA and the HTA in the MR data. As the VAOA is an estimated angle of a terminal relative to the reference direction (i.e., the antenna azimuth) being of a vertical direction, the electronic device may divide the antenna vertical azimuth (that is, the vertical coverage plane) into a plurality of antenna vertical azimuth groups, and represent the antenna vertical azimuth groups through the VAOA. In this case, the electronic device may determine that the preset network quality indicator range includes a fourth network quality indicator range in each preset VAOA group. Then, the electronic device may determine, by using each VAOA, VAOA groups to which individual VAOAs belong, that is, vertical azimuth groups to which individual terminals belong. Then, the electronic device may determine a VAOA group to which each VAOA belongs, and determine a fourth network quality indicator range to which the network quality indicators corresponding to individual VAOAs in the VAOA group belong. Then, the electronic device may determine an average coverage distance of the preset network quality indicator range on the basis of the network quality indicators in the fourth network quality indicator range in each VAOA group and their related network quality.

Alternatively, when the average coverage distance of any preset network quality indicator range is an average value of at least one target distance metrics, and the at least one preset network quality indicator range is at least one fourth network quality indicator range in each preset VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times \text{HTA}_{i,j,k,n})}{\sum_i \sum_j R_{i,j,k,n}};$$

wherein, $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in the $i$th second preset period; and $R_{i,j,k,n}$ is the number of network indicators sent by the $j$th terminal in the $k$th fourth network quality indicator range in the $n$th VAOA group in the $i$th second preset period, or $R_{i,j,k,n}$ is the number of second preset periods in the first preset period.

Specifically, the electronic device may determine the fourth network quality indicator range in each VAOA group as the preset network quality indicator range, and determine at least one distance metrics belonging to each fourth network quality indicator range. Then, the electronic device may calculate an average value of at least one distance metrics corresponding to each fourth network quality indicator range, and determine the average value as the average coverage distance corresponding to the fourth network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of network indicators sent by each terminal in each second preset period is 1. In addition, the electronic device may further determine the number of second preset periods in the first preset period as the denominator, so that no matter whether the terminal sends the network indicator or not in the second preset period, the number of second preset periods does not change.

Optionally, the electronic device may determine a fourth network quality indicator range to which each network quality indicator belongs, and then determine a VAOA group to which each network quality indicator in the fourth network quality indicator range belongs, which is not limited to the embodiment of the present application.

For example, it is assumed that the electronic device acquires, in a preset time period T, a plurality of groups of MR data (that is, the plurality of network indicators in the present application) reported by a plurality of terminals, where each group of MR data includes RSRP, HTA, VAOA, and VAOA. Then, the electronic device may determine, from the plurality of MR data, a $k$th fourth RSRP range in at least one fourth RSRP range (i.e., in the fourth network quality indicator range in the present application) to which $RSRP_x$ (i.e., the network quality indicator sent by the $j$th terminal in the $i$th second preset period in the present application) in the $x$th group of MR data (i.e., the network indicators sent by the $j$th terminal in the $i$th second preset period in the present application) belongs, and determine the $VAOA_x$ corresponding to the network quality indicator $RSRP_x$. Next, the electronic device may determine an $m$th VAOA group to which the $VAOA_x$ belongs among the M VAOA groups. Then, the electronic device may determine an average coverage distance with respect to the $k$th fourth RSRP range in the $m$th VAOA group by the following formula:

$$Mean\_HTA_{RSRP_{k},M_m} = \frac{\sum_{x,(RSRP_{k\_Low} \ll RSRP_x \ll RSRP_{k_{High}}) \& (VAOA_i \in M_m)} (RSRP_x \times HTA_x)}{\sum_{x,(RSRP_{k\_Low} \ll RSRP_x \ll RSRP_{k_{High}}) \& (VAOA_i \in M_m)} RSRP_x};$$

wherein, $Mean\_HTA_{RSRP_{k},M_m}$ represents the average coverage distance with respect to the $k$th fourth RSRP range in the

$m$th VAOA group; $RSRP_x$ represents RSRP in the $x$th group of MR data in the $k$th fourth RSRP range in the $m$th VAOA group; $HTA_x$ represents HTA in the $x$th group of MR data in the $k$th fourth RSRP range in the $m$th VAOA group; $RSRP_{k\_Low} \ll RSRP_x \ll RSRP_{kHigh}$ represents that the $RSRP_x$ is less than a minimum value of the $k$th fourth RSRP range and greater than a maximum value of the $k$th fourth RSRP range, that is, the $RSRP_x$ belongs to the $k$th fourth RSRP range; and the $VAOA_x \in M_m$ represents that the $VAOA_x$ belongs to the $m$th VAOA group.

In this way, a value of coverage distance in the horizontal direction when the network quality indicator is within the fourth network quality range in each VAOA group may be represented by $Mean\_HTA_{RSRPk,Mm}$.

Case 4: the at least one preset distance metrics range is at least one fifth network quality indicator range in each preset spatial coverage direction group. With reference to Fig. 3, and as shown in Fig. 13, at S1301: the electronic device determines an average coverage distance of the at least one fifth network quality indicator range on the basis of network quality indicators in the at least one fifth network quality indicator range and HTA corresponding to the network quality indicators. The spatial coverage direction group is a direction angle group in which a VAOA group and a HAOA group coexist.

When the average coverage distance of any preset network quality indicator range is a ratio of a sum of at least one first product to a sum of at least one target network quality indicator, and the at least one preset network quality indicator range is at least one fifth network quality indicator range in each preset spatial coverage direction group, an average coverage distance of a $k$th fifth network quality indicator range in an $h$th spatial coverage direction group meets the following formula:

$$Mean\_HTA_{R_{k,h}} = \frac{\sum_i \sum_j (R_{i,j,k,h} \times HTA_{i,j,k,h})}{\sum_i \sum_j R_{i,j,k,h}};$$

wherein, $Mean\_HTA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $HTA_{i,j,k,h}$ is a distance metrics sent by a $j$th terminal in the $k$th fifth network quality indicator range in the $h$th spatial coverage direction group in the $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Specifically, because the distance metrics is determined on the basis of the HTA in the MR data, the electronic device may determine the distance metrics on the basis of the VAOA, the HAOA, and the HTA in the MR data. As the VAOA is an estimated angle of a terminal relative to the reference direction (i.e., the antenna azimuth) being of a vertical direction, and the HAOA is an estimated angle of a terminal relative to the reference direction (i.e., the antenna azimuth) being of a horizontal direction, the electronic device may divide the antenna vertical azimuth angle (that is, the vertical coverage plane) into a plurality of antenna vertical azimuth groups and represent the antenna vertical azimuth groups through the VAOA, and further divide the antenna horizontal azimuth angle (that is, the horizontal coverage plane) into a plurality of antenna horizontal azimuth groups and represent the antenna horizontal azimuth groups through the HAOA.

In this case, the electronic device can determine that the preset network quality indicator range is a fifth network quality indicator range in each preset spatial coverage direction group. Then, the electronic device may determine, by using each VAOA, VAOA groups to which individual VAOAs belong, that is, vertical azimuth groups to which individual terminals belong, determine, by using each HAOA, HAOA groups to which individual HAOAs belong, and determine that coexistence of a HAOA group and a VAOA group as a spatial coverage direction group. Then, the electronic device may determine the fifth network quality indicator range to which the network quality indicator corresponding to each VAOA (or HAOA) in the spatial coverage direction group belongs. Then, the electronic device may determine an average coverage distance of the preset network quality indicator range on the basis of the network quality indicators in the fifth network quality indicator range and their corresponding distance metrics.

Alternatively, when the average coverage distance of any preset network quality indicator range is an average value of at least one target distance metrics, and the at least one preset network quality indicator range is at least one fifth network quality indicator range in each preset spatial coverage direction group, an average coverage distance of a $k$th fifth network quality indicator range in an $h$th spatial coverage direction group meets the following formula:

$$Mean\_HTA_{R_{k,h}} = \frac{\sum_i \sum_j HTA_{i,j,k,h}}{\sum_i \sum_j N_{i,j,k,h}};$$

wherein, $Mean\_HTA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $HTA_{i,j,k,h}$ is a distance metrics sent by a $j$th terminal in the $k$th fifth network quality indicator range in the $h$th spatial coverage direction group in the $i$th second preset period; and $R_{i,j,k,h}$ is the number of network indicators sent by the $j$th terminal in the $k$th fifth network quality indicator range in the $h$th spatial coverage direction group in the $i$th second preset period, or the $N_{i,j,k,h}$ is the number of second preset periods in the first preset period.

Specifically, the electronic device may determine the fifth network quality indicator range in each spatial coverage direction group as the preset network quality indicator range, and determine at least one distance metrics belonging to each fifth network quality indicator range. Then, the electronic device may calculate an average value of at least one distance metrics corresponding to each fifth network quality indicator range, and determine the average value as the average coverage distance corresponding to the fifth network quality indicator range.

It should be understood that when determining the average value, the electronic device may use the number of network indicators sent by each terminal in each second preset period as the denominator. Because the electronic device determines the at least one initial network indicator as one network indicator in a second preset period, the number of network indicators sent by each terminal in each second preset period is 1. In addition, the electronic device may further determine the number of second preset periods in the first preset period as the denominator, so that no matter whether the terminal sends the network indicator or not in the second preset periods, the number of second preset periods does not change.

It should be understood that the first network quality indicator range, the second network quality indicator range, the third network quality indicator range, the fourth network quality indicator range, the fifth network quality indicator range, the HAOA group, the VAOA group, and the spatial coverage direction group in this solution are all preset, and no restriction is imposed on a manner of presetting. For example, 0 to 360 may be preset as one HAOA group, and infinitesimal network quality indicators and infinitely-great network quality indicators may be preset as one network quality indicator range.

For example, it is assumed that the electronic device acquires, in a preset time period T, a plurality of groups of MR data (that is, the plurality of network indicators in the present application) reported by a plurality of terminals, where each group of MR data includes RSRP, HTA, VAOA, and VAOA. Then, the electronic device may determine a kth fifth RSRP range in at least one fifth RSRP range (that is, the fifth network quality indicator range in the present application) to which $RSRP_x$ (that is, the network quality indicator sent by the $j$th terminal in the ith second preset period in the present application) in the xth group of MR data (that is, the network indicators sent by the jth terminal in the ith second preset period in the present application) belongs, and determine $HAOA_x$ and $VAOA_x$ corresponding to the $RSRP_x$. Next, the electronic device may determine an mth VAOA group to which the $VAOA_x$ belongs among M VAOA groups and an nth HAOA group to which the $HAOA_x$ belongs among the M HAOA groups. Then, the electronic device may determine an average coverage distance with respect to a kth fifth RSRP range in the corresponding spatial coverage direction group of an mth VAOA group and an nth HAOA group by the following formula:

$$Mean\_HTA_{RSRP_{k},N_n,M_m} = \frac{\sum_{x,(RSRP_{k\_Low} \ll RSRP_x \ll RSRP_{k_{High}})\&(VAOA_x \in M_m)\&(HAOA_x \in N_n)}(RSRP_x \times HTA_x)}{\sum_{x,((RSRP_{k\_Low} \ll RSRP_x \ll RSRP_{k_{High}})\&(VAOA_x \in M_m)\&(HAOA_x \in N_n))}RSRP_x};$$

wherein, $Mean\_HTA_{RSRP_{k},N_n,M_m}$ represents the average coverage distance with respect to the kth fifth RSRP range in the corresponding spatial coverage direction group of the mth VAOA group and the nth HAOA group; $RSRP,$ represents an RSRP in the xth group of MR data in the kth fifth RSRP range in the corresponding spatial coverage direction group of the mth VAOA group and the nth HAOA group; $HTA_x$ represents HTA in the xth group of MR data in the kth fifth RSRP range in the corresponding spatial coverage direction group of the mth VAOA group and the nth HAOA group; $RSRP_{k\_Low}$ « $RSRP,$ « $RSRP_{kHigh}$ represents that the $HTA_x$ is less than a minimum value of the kth fifth RSRP range and greater than a maximum value of the kth fifth RSRP range, that is, the $HTA_x$ belongs to the kth fifth RSRP range; the $VAOA_x E M_m$ represents that the $VAOA_x$ belongs to the mth VAOA group, and the $HAOA_x E N_n$ represents that the $HAOA_x$ belongs to the nth HAOA group.

In this way, a value of coverage distance in the horizontal direction when the network quality indicator is in the fifth network quality range in each spatial coverage direction group may be represented by $Mean\_HTA_{RSRP_{k},N_n,M_m}$.

For another example, it is assumed that 5 groups of MR data are acquired by the electronic device in the preset time period T, which are as follows: $RSRP_1$ = -92dB, $TA_1$ = 2, $VAOA_1$ = 10, $HAOA_1$ = 25; $RSRP_2$ = -103dB, $TA_2$ = 2, $VAOA_2$ = 10, $HAOA_2$ = 125; $RSRP_3$ = -81dB, $TA_3$ = 5, $VAOA_3$ = 20, $HAOA_3$ = 175; $RSRP_4$ = -81dB, $TA_4$ = 8, $VAOA_4$ = 20, $HAOA_4$ = 75; $RSRP_5$ = -116dB, $TA_5$ = 9, $VAOA_5$ = 30, $HAOA_5$ = 205, H$TA_1$ = 2 * cos(10 + 20) = 0.3, H$TA_2$ = 2 * cos(10 + 20) = 0.3, H$TA_3$ = 5 * cos (20 + 20)=3.3, $HTA_4$ = 8 * cos(20 + 20) = 5.28, $HTA_5$ = 9 * cos(30 + 20) = 8.64.

In addition, the electronic device may determine that the antenna mechanical downtilt angle is Angle = 20. The horizontal azimuth groups are divided into three groups, which are $M_1$ = {0, 120}, $M_2$ = {120, 240}, and $M_3$ = {240, 360}, respectively; the vertical azimuth groups are divided into three groups, which are $V_1$ = {0, 120}, $V_2$ = {120, 240}, and $V_3$ =

{240, 360}, respectively; the vertical azimuth groups are divided into three groups, which are {-∞, -110}, {-110, -90}, {-90, -70}, and {-70, +∞}, respectively.

(1) The electronic device may determine a network-quality-based average coverage distance (that is, an average coverage distance of the first network quality indicator range in the present application):

An average coverage distance of the first network quality indicator range (that is, the first network quality indicator range in the present application) is: $((-116)*9)/-116=9$, or $((-116)* HTA_1)/-116=0.3$.

An average coverage distance of the second network quality indicator range is: $((-92)*2+(-103)*5)/((-92)+(-103))=3.5$, or $((-92)* HTA_1+(-103)* HTA_2)/((-92)+(-103))=0.15$.

An average coverage distance of the third network quality indicator range is: $((-81)*5+(-81)*8)/((-81)+(-81))=6.5$, or $((-81)* HTA_3+(-81)* HTA_4)/((-81)+(-81))=4.29$.

(2) The electronic device may determine, from different horizontal azimuth groups, a network-quality-based average coverage distance (that is, an average coverage distance of the third network quality indicator range in different HAOA groups in the present application):

In $M_1$ group: an average coverage distance of the second network quality indicator range is: $((-92)*2)/(-92)=2$, or $(-92)* HTA_1/(-92)=0.3$.

An average coverage distance of the third network quality indicator range is: $((-81)*8)/(-81)=8$, or $(-81)* HTA_4/(-81)=5.28$.

In $M_2$ group: an average coverage distance of the first network quality indicator range is: $((-116)*9)/(-116)=9$, or $(-116)* HTA_5/(-116)=8.64$.

An average coverage distance of the second network quality indicator range is: $((-103)*2)/(-103)=2$, or $(-103)* HTA_2/(-103)=0.3$.

An average coverage distance of the third network quality indicator range is: $((-81)*5)/(-81)=5$, or $(-81)* HTA_3/(-81)=3.3$.

(3) The electronic device may determine, from different vertical azimuth groups, a network-quality-based average coverage distance (that is, an average coverage distance of the fourth network quality indicator range in different VAOA groups in the present application):

In $V_1$ group: an average coverage distance of a first network quality indicator range (that is, the third network quality indicator range in different VAOA groups in the present application) is: $((-116)*9)/9=-116$, or $(-116)* HTA_5/(-116)=8.64$.

An average coverage distance of the second network quality indicator range is: $((-92)*2+(-103)*2)/((-92)+(-103))=4$, or $((-92)* HTA_1+(-103)* HTA_2)/((-92)+(-103))=0.3$.

An average coverage distance of the third network quality indicator range is: $((-81)*5+(-81)*8)/(5+8)=-81$, or $((-81)* HTA_3+(-81)* HTA_4)/((-81)+(-81))=8.58$.

(4) The electronic device may determine, from different spatial coverage direction groups, a network-quality-based average coverage distance (that is, an average coverage distance of the fifth network quality indicator range in the different spatial coverage direction groups in the present application):

In $M_1$ group and also $V_1$ group: an average coverage distance of the second network quality indicator range is: $((-92)*2)/(-92)=2$, or $((-92)* HTA_1)/(-92)=0.3$.

An average coverage distance of the third network quality indicator range is: $((-81)*8)/(-81)=8$, $((-81)* HTA_4)/(-81)=5.28$.

In $M_2$ group and also $V_1$ group: an average coverage distance of the first network quality indicator range is: $((-116)*9)/(-116)=9$, or $((-116)* HTA_4)/(-116)=8.64$.

An average coverage distance of the second network quality indicator range is: $((-103)*2)/(-103)=2$, or $((-103)* HTA_2)/(-103)=0.3$.

An average coverage distance of the third network quality indicator range is: $((-81)*5)/(-81)=5$, or $((-81)* HTA_3)/(-81)=3.3$.

The foregoing content mainly describes the solutions provided by the embodiments of the present application from a perspective of methodology. To implement the foregoing functions, corresponding hardware structures and/or software modules for performing respective functions are included. Those skilled in the art should readily appreciate that, in combination with the units and algorithm steps of the examples described in the embodiments disclosed herein, the present disclosure can be implemented in hardware or a combination of hardware and computer software. Whether a function is performed by hardware or computer software driven hardware depends on specific application and design constraints of the technical solution. A professional may use different approaches to implement the described function for each particular application, but such implementation should not be considered as going beyond the scope of the present application.

In an embodiment of the present application, a coverage distance determination apparatus may be divided into functional modules according to the foregoing method example. For example, respective functional modules may be divided to correspond to respective functions, or two or more functions may be integrated into one processing module. The foregoing integrated module may be implemented in a form of hardware, or may be implemented in a form of a software function module. Optionally, division of modules in the embodiments of the present application is illustrative, which is merely a logical function division, and other division manners may be used in actual implementation.

Fig. 14 is a schematic structural diagram of a coverage distance determination apparatus according to an embodiment of the present application. The coverage distance determination apparatus may be configured to perform the coverage distance determination method shown in any one of Fig. 3 to Fig. 14. The coverage distance determination apparatus shown in Fig. 14 includes a determination unit 1401.

The determination unit 1401 is configured to determine a plurality of network indicators of a target cell; and each of the network indicators includes a network quality indicator and a distance metrics. For example, with reference to Fig. 3, the determination unit 1401 is configured to perform S301.

The determination unit 1401 is further configured to determine an average coverage distance of at least one preset network quality indicator range on the basis of network quality indicators and distance metrics in individual network indicators. For example, with reference to Fig. 3, the determination unit 1401 is configured to perform S302.

Optionally, there is a correspondence relationship between a network quality indicator and a distance metrics in each network indicator; an average coverage distance of any preset network quality indicator range is a ratio of a sum of at least one first product to a sum of at least one target network quality indicator; wherein one first product is a product of one target network quality indicator and itsa corresponding distance metrics; one target network quality indicator is a network quality indicator in any preset network quality indicator range; or an average coverage distance of any preset network quality indicator range is an average value of at least one target distance metrics; and one target distance metrics is a distance metrics corresponding to a network quality indicator in any preset network quality indicator range.

Optionally, a first preset period includes a plurality of second preset periods; and the determination unit 1401 is specifically configured to: acquire at least one initial network indicator of a target cell in each of the second preset periods; and determine at least each network indicator on the basis of the at least one initial network indicator in each of the second preset periods.

Optionally, when the distance metrics includes a timing advance TA, the at least one preset network quality indicator range is at least one preset first network quality indicator range; alternatively, the at least one preset network quality indicator range is at least one second network quality indicator range in each preset antenna azimuth AOA group.

Optionally, the AOA group is any one of the following: an antenna horizontal azimuth HAOA group, an antenna vertical azimuth VAOA group, and a spatial coverage direction group; the HAOA group is an azimuth angle group determined by dividing a horizontal coverage plane of the target cell; the VAOA group is an azimuth angle group determined by dividing a vertical coverage plane of the target cell; the spatial coverage direction group is an azimuth angle group in which the VAOA group and the HAOA group coexist. At least one second network quality indicator range in each preset AOA group is: at least one third network quality indicator range in each preset HAOA group; or at least one fourth network quality indicator range in each preset VAOA group; or at least one fifth network quality indicator range in each preset spatial coverage direction group.

Optionally, when the average coverage distance of any preset network quality indicator range is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_TA_{R_k} = \frac{\sum_i \ \sum_j (R_{i,j,k} \times TA_{i,j,k})}{\sum_i \ \sum_j R_{i,j,k}};$$

wherein, $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $R_{i,j,k}$ a network quality indicator corresponding to the distance metrics sent by the $j$th terminal in the $k$th first network quality indicator range in the $i$th second preset period.

Optionally, when the average coverage distance of any preset network quality indicator range is a ratio of a sum of at least one first product to a sum of at least one target network quality indicator, and the at least one preset network quality indicator range is at least one second network quality indicator range in each preset antenna azimuth AOA group, an average coverage distance of a $k$th second network quality indicator range in a $t$th AOA group meets the following formula:

$$Mean\_TA_{R_{k,t}} = \frac{\sum_i \sum_j (R_{i,j,k,t} \times TA_{i,j,k,t})}{\sum_i \sum_j R_{i,j,k,t}};$$

wherein, $Mean\_TA_{R_{k,t}}$ is the average coverage distance of the $k$th second network quality indicator range in the $t$th AOA group; the $TA_{i,j,k,t}$ is a distance metrics sent by the $j$th terminal in the $k$th second network quality indicator range in the $t$th AOA group in the $i$th second preset period; and the $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any preset network quality indicator range is a ratio of a sum of at least one first product to a sum of at least one target network quality indicator, and the at least one preset network quality indicator range is at least one third network quality indicator range in each preset HAOA group, an average coverage distance of a $k$th third network quality indicator range in an $m$th HAOA group meets the following formula:

$$Mean\_TA_{R_{k,m}} = \frac{\sum_i \sum_j (R_{i,j,k,m} \times TA_{i,j,k,m})}{\sum_i \sum_j R_{i,j,k,m}};$$

wherein, the $Mean\_TA_{R_{k,m}}$ is the average coverage distance of the $k$th third network quality indicator range in the $m$th HAOA group; the $TA_{i,j,k,m}$ is a distance metrics sent by the $j$th terminal in the $k$th third network quality indicator range in the $m$th HAOA group in the $i$th second preset period; and the $R_{i,j,k,m}$ is a network quality indicator corresponding to the distance metrics sent by the $j$th terminal in the $k$th third network quality indicator range in the $m$th HAOA group in the $i$th second preset period.

Optionally, when the average coverage distance of any preset network quality indicator range is a ratio of a sum of at least one first product to a sum of at least one target network quality indicator, and the at least one preset network quality indicator range is at least one fourth network quality indicator range in each preset VAOA group, an average coverage distance of a $k$th fourth network quality indicator range in the $n$th VAOA group meets the following formula:

$$Mean\_TA_{R_{k,n}} = \frac{\sum_i \sum_j (R_{i,j,k,n} \times TA_{i,j,k,n})}{\sum_i \sum_j R_{i,j,k,n}};$$

wherein, $Mean\_TA_{R_{k,n}}$ is the average coverage distance of the $k$th fourth network quality indicator range in the $n$th VAOA group; the $TA_{i,j,k,t}$ is a distance metrics sent by the $j$th terminal in the $k$th fourth network quality indicator range in the $n$th VAOA group in the $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

Optionally, when the average coverage distance of any preset network quality indicator range is a ratio of a sum of at least one first product to a sum of at least one target network quality indicator, and the at least one preset network quality indicator range is at least one fifth network quality indicator range in each preset spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

wherein, $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by the $j$th terminal in the $k$th fifth network quality indicator range in the $h$th spatial coverage direction group in the $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

Optionally, when the at least one preset network quality indicator range is at least one preset first network quality indicator range, an average coverage distance of the $k$th first network quality indicator range meets the following formula:

$$Mean\_TA_{R_k} = \frac{\sum_i \ \sum_j \ TA_{i,j,k}}{\sum_i \ \sum_j \ N_{i,j,k}};$$

wherein, $Mean\_TA_{R_k}$ is the average coverage distance of the $k$th first network quality indicator range; $TA_{i,j,k}$ is a distance metrics sent by the $j$th terminal in the $k$th first network quality indicator range in the $i$th second preset period; and $N_{i,j,k}$ is the number of network indicators sent by the $j$th terminal in the $k$th first network quality indicator range in the $i$th second preset period, or $N_{i,j,k}$ is the number of second preset periods in the first preset period.

Optionally, when the average coverage distance of any preset network quality indicator range is an average value of at least one target distance metrics, and the at least one preset network quality indicator range is at least one second network quality indicator range in each preset antenna azimuth AOA group, an average coverage distance of a $k$th second network quality indicator range in a $t$th AOA group meets the following formula:

$$Mean\_TA_{R_{k,t}} = \frac{\sum_i \ \sum_j TA_{i,j,k,t}}{\sum_i \ \sum_j \ N_{i,j,k,t}};$$

wherein, $Mean\_TA_{R_{k,t}}$ is the average coverage distance of the $k$th second network quality indicator range in the $t$th AOA group; $TA_{i,j,k,t}$ is a distance metrics sent by the $j$th terminal in the $k$th second network quality indicator range in the $t$th AOA group in the $i$th second preset period; and $N_{i,j,k,t}$ is the number of network indicators sent by the $j$th terminal in the $k$th second network quality indicator range in the $t$th AOA group in the $i$th second preset period, or the $N_{i,j,k,t}$ is the number of second preset periods in the first preset period.

Optionally, when the average coverage distance of any preset network quality indicator range is an average value of at least one target distance metrics, and the at least one preset network quality indicator range is at least one third network quality indicator range in each preset HAOA group, an average coverage distance of a $k$th third network quality indicator range in an $m$th HAOA group meets the following formula:

$$Mean\_TA_{R_{k,m}} = \frac{\sum_i \ \sum_j TA_{i,j,k,m}}{\sum_i \ \sum_j \ N_{i,j,k,m}};$$

wherein, $Mean\_TA_{R_{k,m}}$ is the average coverage distance of the $k$th third network quality indicator range in the $m$th HAOA group; the $TA_{i,j,k,m}$ is a distance metrics sent by the $j$th terminal in the $k$th third network quality indicator range in the $m$th HAOA group in the $i$th second preset period; and $N_{i,j,k,m}$ is the number of network indicators sent by the $j$th terminal in the $k$th third network quality indicator range in the $m$th HAOA group in the $i$th second preset period, or the $N_{i,j,k,m}$ is the number of second preset periods in the first preset period.

Optionally, when the average coverage distance of any preset network quality indicator range is an average value of at least one target distance metrics, and the at least one preset network quality indicator range is at least one fourth network quality indicator range in each preset VAOA group, an average coverage distance of a $k$th fourth network quality indicator range in the $n$th VAOA group meets the following formula:

$$Mean\_TA_{R_{k,n}} = \frac{\sum_i \ \sum_j TA_{i,j,k,n}}{\sum_i \ \sum_j N_{i,j,k,n}};$$

wherein, $Mean\_TA_{R_{k,n}}$ is the average coverage distance of the $k$th fourth network quality indicator range in the $n$th VAOA group; $TA_{i,j,k,t}$ is a distance metrics sent by the $j$th terminal in the $k$th fourth network quality indicator range in the $n$th VAOA group in the $i$th second preset period; and $N_{i,j,k,n}$ is the number of network indicators sent by the $j$th terminal in the $k$th fourth network quality indicator range in the $n$th VAOA group in the $i$th second preset period, or the $N_{i,j,k,n}$ is the number of second preset periods in the first preset period.

Optionally, when the average coverage distance of any preset network quality indicator range is an average value of at least one target distance metrics, and the at least one preset network quality indicator range is at least one fifth network quality indicator range in each preset spatial coverage direction group, an average coverage distance of a $k$th fifth network quality indicator range in an $h$th spatial coverage direction group meets the following formula:

$$Mean\_TA_{R_{k,h}} = \frac{\sum_i \ \sum_j (R_{i,j,k,h} \times TA_{i,j,k,h})}{\sum_i \ \sum_j R_{i,j,k,h}};$$

wherein, $Mean\_TA_{R_{k,h}}$ is the average coverage distance of the $k$th fifth network quality indicator range in the $h$th spatial coverage direction group; the $h$th spatial coverage direction group is a direction angle group in which the $m$th VAOA group and the $n$th HAOA group coexist; $TA_{i,j,k,h}$ is a distance metrics sent by the $j$th terminal in the $k$th fifth network quality indicator range in the $h$th spatial coverage direction group in the $i$th second preset period; and $R_{i,j,k,h}$ is the number of network indicators sent by the $j$th terminal in the $k$th fifth network quality indicator range in the $h$th spatial coverage direction group in the $i$th second preset period, or the $R_{i,j,k,h}$ is the number of second preset periods in the first preset period.

Optionally, when the distance metrics includes a timing advance in a horizontal direction, HTA, the at least one preset network quality indicator range is at least one preset first network quality indicator range; and the HTA is determined on the basis of a TA, a VAOA, and an antenna mechanical downtilt of the target cell;

alternatively, the at least one preset network quality indicator range is at least one second network quality indicator range in each preset antenna azimuth AOA group.

Optionally, the AOA group is any one of the following: an antenna horizontal azimuth HAOA group, an antenna vertical azimuth VAOA group, and a spatial coverage direction group; the HAOA group is an azimuth angle group determined by dividing a horizontal coverage plane of the target cell; the VAOA group is an azimuth angle group determined by dividing a vertical coverage plane of the target cell; the spatial coverage direction group is an azimuth angle group in which the VAOA group and the HAOA group coexist; and at least one second network quality indicator range in each preset AOA group is: at least one third network quality indicator range in each preset HAOA group; or at least one fourth network quality indicator range in each preset VAOA group; or at least one fifth network quality indicator range in each preset spatial coverage direction group.

Optionally, when the average coverage distance of any preset network quality indicator range is a ratio of a sum of at least one first product to a sum of at least one target network quality indicator, and the at least one preset network quality indicator range is at least one preset first network quality indicator range, an average coverage distance of a $k$th first network quality indicator range meets the following formula:

$$Mean\_HTA_{R_k} = \frac{\sum_i \sum_j (R_{i,j,k} \times HTA_{i,j,k})}{\sum_i \sum_j R_{i,j,k}};$$

wherein, $Mean\_HTA_{R_k}$ is the average coverage distance of the $k$th first network quality indicator range; $HTA_{i,j,k}$ is a distance metrics sent by the $j$th terminal in the $k$th first network quality indicator range in the $i$th second preset period; and $R_{i,j,k}$ is a network quality indicator corresponding to the distance metrics sent by the $j$th terminal in the $k$th first network quality indicator range in the $i$th second preset period.

Optionally, when the average coverage distance of any preset network quality indicator range is a ratio of a sum of at least one first product to a sum of at least one target network quality indicator, and the at least one preset network quality indicator range is at least one second network quality indicator range in each preset antenna azimuth AOA group, an average coverage distance of a $k$th second network quality indicator range in a $t$th AOA group meets the following formula:

$$Mean\_HTA_{R_{k,t}} = \frac{\sum_i \sum_j (R_{i,j,k,t} \times HTA_{i,j,k,t})}{\sum_i \sum_j R_{i,j,k,t}};$$

wherein, $Mean\_HTA_{R_{k,t}}$ is the average coverage distance of the $k$th second network quality indicator range in the $t$th AOA group; the $HTA_{i,j,k,t}$ is a distance metrics sent by the $j$th terminal in the $k$th second network quality indicator range in the $t$th AOA group in the $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

Optionally, when the average coverage distance of any preset network quality indicator range is a ratio of a sum of at least one first product to a sum of at least one target network quality indicator, and the at least one preset network quality indicator range is at least one third network quality indicator range in each preset HAOA group, an average coverage distance of a $k$th third network quality indicator range in an $m$th HAOA group meets the following formula:

$$Mean\_HTA_{R_{k,m}} = \frac{\sum_i \sum_j (R_{i,j,k,m} \times HTA_{i,j,k,m})}{\sum_i \sum_j R_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by the $j$th terminal in the $k$th third network quality indicator range in the $m$th HAOA group in the $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

Optionally, when the average coverage distance of any preset network quality indicator range is a ratio of a sum of at least one first product to a sum of at least one target network quality indicator, and the at least one preset network quality indicator range is at least one fourth network quality indicator range in each preset VAOA group, an average coverage distance of a *k*th fourth network quality indicator range in the *n*th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

wherein, $Mean\_HTA_{R_{k,n}}$ is the average coverage distance of the *k*th fourth network quality indicator range in the *n*th VAOA group; $HTA_{i,j,k,n}$ is a distance metrics sent by the *j*th terminal in the *k*th fourth network quality indicator range in the *n*th VAOA group in the *i*th second preset period; and $R_{i,j,k,n}$ is a network quality indicator corresponding to the distance metrics sent by the *j*th terminal in the *k*th fourth network quality indicator range in the *n*th VAOA group in the *i*th second preset period.

Optionally, when the average coverage distance of any preset network quality indicator range is a ratio of a sum of at least one first product to a sum of at least one target network quality indicator, and the at least one preset network quality indicator range is at least one fifth network quality indicator range in each preset spatial coverage direction group, an average coverage distance of a *k*th fifth network quality indicator range in an *h*th spatial coverage direction group meets the following formula:

$$Mean\_HTA_{R_{k,h}} = \frac{\sum_i \sum_j (R_{i,j,k,h} \times HTA_{i,j,k,h})}{\sum_i \sum_j R_{i,j,k,h}};$$

wherein, $Mean\_HTA_{R_{k,h}}$ is the average coverage distance of the *k*th fifth network quality indicator range in the *h*th spatial coverage direction group; the *h*th spatial coverage direction group is a direction angle group in which the *m*th VAOA group and the *n*th HAOA group coexist; $HTA_{i,j,k,h}$ is a distance metrics sent by the *j*th terminal in the *k*th fifth network quality indicator range in the *h*th spatial coverage direction group in the *i*th second preset period; and $R_{i,j,k,h}$ is a network quality indicator corresponding to the distance metrics sent by the *j*th terminal in the *k*th fifth network quality indicator range in the *h*th spatial coverage direction group in the *i*th second preset period.

Optionally, when the average coverage distance of any preset network quality indicator range is an average value of at least one target distance metrics, and the at least one preset network quality indicator range is at least one preset first network quality indicator range, an average coverage distance of a *k*th first network quality indicator range meets the following formula:

$$Mean\_HTA_{R_k} = \frac{\sum_i \sum_j HTA_{i,j,k}}{\sum_i \sum_j N_{i,j,k}};$$

wherein, $Mean\_HTA_{R_k}$ is the average coverage distance of the *k*th first network quality indicator range; $HTA_{i,j,k}$ is a distance metrics sent by the *j*th terminal in the *k*th first network quality indicator range in the *i*th second preset period; and $N_{i,j,k}$ is the number of network indicators sent by the *j*th terminal in the *k*th first network quality indicator range in the *i*th second preset period, or $N_{i,j,k}$ is the number of second preset periods in the first preset period.

Optionally, when the average coverage distance of any preset network quality indicator range is an average value of at least one target distance metrics, and the at least one preset network quality indicator range is at least one second network quality indicator range in each preset antenna azimuth AOA group, an average coverage distance of a *k*th second network quality indicator range in a *t*th AOA group meets the following formula:

$$Mean\_HTA_{R_{k,t}} = \frac{\sum_i \sum_j HTA_{i,j,k,t}}{\sum_i \sum_j N_{i,j,k,t}};$$

wherein, $Mean\_HTA_{R_{k,t}}$ is the average coverage distance of the *k*th second network quality indicator range in the *t*th AOA group; the $HTA_{i,j,k,t}$ is a distance metrics sent by the *j*th terminal in the *k*th second network quality indicator range in the *t*th AOA group in the *i*th second preset period; and $N_{i,j,k,t}$ is the number of network indicators sent by the *j*th terminal in the *k*th second network quality indicator range in the *t*th AOA group in the *i*th second preset period, or $N_{i,j,k,t}$ is the number of second preset periods in the first preset period.

Optionally, when the average coverage distance of any preset network quality indicator range is an average value of at least one target distance metrics, and the at least one preset network quality indicator range is at least one third network quality indicator range in each preset HAOA group, an average coverage distance of a *k*th third network quality indicator range in an *m*th HAOA group meets the following formula:

$$Mean\_HTA_{R_{k,m}} = \frac{\sum_i \sum_j HTA_{i,j,k,m}}{\sum_i \sum_j N_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by the $j$th terminal in the $k$th third network quality indicator range in the $m$th HAOA group in the $i$th second preset period; and the $N_{i,j,k,m}$ is the number of network indicators sent by the $j$th terminal in the $k$th third network quality indicator range in the $m$th HAOA group in the $i$th second preset period, or $N_{i,j,k,m}$ is the number of second preset periods in the first preset period.

Optionally, when the average coverage distance of any preset network quality indicator range is an average value of at least one target distance metrics, and the at least one preset network quality indicator range is at least one fourth network quality indicator range in each preset VAOA group, an average coverage distance of a $k$th fourth network quality indicator range in the $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

wherein, $Mean\_HTA_{R_{k,n}}$ is an average coverage distance of the $k$th fourth network quality indicator range in the $n$th VAOA group; $HTA_{i,j,k,n}$ is a distance metrics sent by the $j$th terminal in the $k$th fourth network quality indicator range in the $n$th VAOA group in the $i$th second preset period; and $R_{i,j,k,n}$ is the number of network indicators sent by the $j$th terminal in the $k$th fourth network quality indicator range in the $n$th VAOA group in the $i$th second preset period, or $R_{i,j,k,n}$ is the number of second preset periods in the first preset period.

An embodiment of the present application further provides a computer-readable storage medium, and the computer-readable storage medium includes a computer-executable instruction which, when running on a computer, causes the computer to perform the coverage distance determination method provided by the foregoing embodiments.

An embodiment of the present application further provides a computer program which may be directly loaded into a memory and includes software codes, and after the computer program is loaded and executed by a computer, the coverage distance determination method provided by the foregoing embodiments can be implemented.

Those skilled in the art should appreciate that, in one or more examples described above, the functions described in the present application may be implemented in hardware, software, firmware, or any combination thereof. When implemented by using software, these functions may be stored in a computer-readable medium or transmitted as one or more instructions or codes on a computer-readable medium. The computer-readable medium includes computer-readable storage medium and communication medium. Communication medium include any medium that facilitates transfer of computer programs from one place to another. The storage medium may be any available medium accessible by a general purpose or special purpose computer.

Through the description of the above embodiments, those skilled in the art can clearly understand that, for the convenience and brevity of the description, only the above division of the functional modules is taken as an example for description, but in actual application, the above functions can be distributed to and completed by different functional modules as required. That is, the internal structure of the device is divided into different functional modules to complete all or part of the functions described above.

In several embodiments provided in the present application, it should be understood that the disclosed device and method may be implemented in another manner. For example, the device embodiments described above are merely illustrative. For example, a division of the modules or units is merely a logical function division, and there may be another division manner in actual implementation. For example, multiple units or components may be combined or may be integrated into another device, or some features may be omitted or not be performed. In addition, the coupling or direct coupling or communication connection shown or discussed with respect to each other may be an indirect coupling or communication connection through some interfaces, devices or units, and may be in an electrical, mechanical or other form. The units described as separate components may be or may not be physically separate, and the components shown as units may be one physical unit or multiple physical units. That is, the components may be located in one place, or may be distributed to multiple different places. Some or all of the units may be selected according to actual needs to achieve the objective of the solution of the embodiment.

In addition, respective functional units in embodiments of the present application may be integrated into one processing unit, or respective units may exist alone physically, or two or more units may be integrated into one unit. The integrated unit may be implemented in a form of hardware, or may be implemented in a form of a software functional unit. The integrated unit, if implemented in the form of a software functional unit and sold or used as an independent product, may be stored in a readable storage medium. Based on such understanding, a technical solution of the embodiments of the present disclosure essentially, or a part thereof contributing to the prior art, or all or part of the technical solution may be embodied in the form of a software product, and the software product is stored in a storage medium, and includes several instructions which cause a device (which may be a single-chip microcomputer, a chip, etc. ) or a processor to perform all or part of the steps of the method described in the embodiments of the present disclosure. The foregoing storage medium includes various medium that can store program codes, such as a USB flash disk, a mobile hard disk, a ROM, a RAM, a magnetic disk, or an optical disk.

The above description is only a specific implementation of the present application, but the protection scope of the present application is not limited thereto, and any changes or substitutions that can be easily conceivable by those skilled in the art within the technical scope disclosed by the present application should be covered within the protection scope of the present application. Therefore, the protection scope of the present application shall be defined by the protection scope of the claims.

**Claims**

1. A coverage distance determination method, **characterized by** comprising:

   determining a plurality of network indicators of a target cell in a first preset period, each of the network indicators including a network quality indicator and a distance metrics; and
   determining an average coverage distance of at least one preset network quality indicator range based on network quality indicators and distance metrics in individual network indicators.

2. The method according to claim 1, wherein a correspondence exists between the network quality indicator and the distance metrics in each of the network indicators;

   an average coverage distance of any preset network quality indicator range is a ratio of a sum of at least one first product to a sum of at least one target network quality indicator; wherein one first product is a product of one target network quality indicator and a related distance metrics; and the one target network quality indicator is a network quality indicator in any preset network quality indicator range; or
   an average coverage distance of any preset network quality indicator range is an average value of at least one target distance metrics, and the one target distance metrics is a distance metrics corresponding to a network quality indicator in any preset network quality indicator range.

3. The method according to claim 2, wherein the first preset period comprises a plurality of second preset periods; and determining a plurality of network indicators of a target cell in a first preset period comprises:

   acquiring at least one initial network indicator of the target cell in each of the second preset periods;
   determining each of the network indicators based on the at least one initial network indicator in each of the second preset periods.

4. The method according to claim 3, wherein when the distance metrics comprises timing advance, TA, the at least one preset network quality indicator range is at least one preset first network quality indicator range; or
   the at least one preset network quality indicator range is at least one second network quality indicator range in each preset antenna azimuth AOA group.

5. The method according to claim 4, wherein the AOA group is any one of the following: an antenna horizontal azimuth HAOA group, an antenna vertical azimuth VAOA group, and a spatial coverage direction group; the HAOA group is an azimuth angle group determined by dividing a horizontal coverage plane of the target cell; the VAOA group is an azimuth angle group determined by dividing a vertical coverage plane of the target cell; and the spatial coverage direction group is an azimuth angle group in which the VAOA group and the HAOA group coexist;
   the at least one second network quality indicator range in each preset AOA group is:

   at least one third network quality indicator range in each preset HAOA group; or
   at least one fourth network quality indicator range in each preset VAOA group; or
   at least one fifth network quality indicator range in each preset spatial coverage direction group.

6. The method according to claim 4 or claim 5, wherein when the average coverage distance of any preset network quality indicator range is a ratio of a sum of at least one first product to a sum of at least one target network quality indicator, and the at least one preset network quality indicator range is the at least one preset first network quality indicator range, an average coverage distance of a $k$th first network quality indicator range meets the following formula:

$$Mean\_TA_{R_k} = \frac{\sum_i \sum_j (R_{i,j,k} \times TA_{i,j,k})}{\sum_i \sum_j R_{i,j,k}};$$

wherein, $Mean\_TA_{R_k}$ is the average coverage distance of the $k$th first network quality indicator range; $TA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

7. The method according to claim 4 or claim 5, wherein when the average coverage distance of any preset network quality indicator range is a ratio of a sum of at least one first product to a sum of at least one target network quality indicator, and the at least one preset network quality indicator range is the at least one second network quality indicator range in each preset antenna azimuth AOA group, an average coverage distance of a $k$th second network quality indicator range in a $t$th AOA group meets the following formula:

$$Mean\_TA_{R_{k,t}} = \frac{\sum_i \sum_j (R_{i,j,k,t} \times TA_{i,j,k,t})}{\sum_i \sum_j R_{i,j,k,t}};$$

wherein, $Mean\_TA_{R_{k,t}}$ is the average coverage distance of the $k$th second network quality indicator range in the $t$th AOA group; $TA_{i,j,k,t}$ is a distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

8. The method according to claim 5, wherein when the average coverage distance of any preset network quality indicator range is a ratio of a sum of at least one first product to a sum of at least one target network quality indicator, and the at least one preset network quality indicator range is the at least one third network quality indicator range in each preset HAOA group, an average coverage distance of a $k$th third network quality indicator range in an $m$th HAOA group meets the following formula:

$$Mean\_TA_{R_{k,m}} = \frac{\sum_i \sum_j (R_{i,j,k,m} \times TA_{i,j,k,m})}{\sum_i \sum_j R_{i,j,k,m}};$$

wherein, $Mean\_TA_{R_{k,m}}$ is an average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

9. The method according to claim 5, wherein when the average coverage distance of any preset network quality indicator range is a ratio of a sum of at least one first product to a sum of at least one target network quality indicator, and the at least one preset network quality indicator range is the at least one fourth network quality indicator range in each preset VAOA group, an average coverage distance of a $k$th fourth network quality indicator range in an $n$th VAOA group meets the following formula:

$$Mean\_TA_{R_{k,n}} = \frac{\sum_i \sum_j (R_{i,j,k,n} \times TA_{i,j,k,n})}{\sum_i \sum_j R_{i,j,k,n}};$$

wherein, $Mean\_TA_{R_{k,n}}$ is the average coverage distance of the $k$th fourth network quality indicator range in the $n$th VAOA group; $TA_{i,j,k,n}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the *j*th terminal in the *k*th fourth network quality indicator range in the *n*th VAOA group in the *i*th second preset period.

10. The method according to claim 5, wherein when the average coverage distance of any preset network quality indicator range is a ratio of a sum of at least one first product to a sum of at least one target network quality indicator, and the at least one preset network quality indicator range is the at least one fifth network quality indicator range in each preset spatial coverage direction group, an average coverage distance of a *k*th fifth network quality indicator range in an *h*th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

wherein, $Mean\_TA_{R_{k,h}}$ is the average coverage distance of the *k*th fifth network quality indicator range in the *h*th spatial coverage direction group; the *h*th spatial coverage direction group is a direction angle group in which an *m*th VAOA group and an *n*th HAOA group coexist; $TA_{i,j,k,h}$ is a distance metrics sent by a *j*th terminal in the *k*th fifth network quality indicator range in the *h*th spatial coverage direction group in an *i*th second preset period; and $R_{i,j,k,h}$ is a network quality indicator corresponding to the distance metrics sent by the *j*th terminal in the *k*th fifth network quality indicator range in the *h*th spatial coverage direction group in the *i*th second preset period.

11. The method according to claim 4 or claim 5, wherein when the at least one preset network quality indicator range is the at least one preset first network quality indicator range, an average coverage distance of a *k*th first network quality indicator range meets the following formula:

$$Mean\_TA_{R_k} = \frac{\sum_i \sum_j TA_{i,j,k}}{\sum_i \sum_j N_{i,j,k}};$$

wherein, $Mean\_TA_{R_k}$ is an average coverage distance of the *k*th first network quality indicator range; $TA_{i,j,k}$ is a distance metrics sent by a *j*th terminal in the *k*th first network quality indicator range in an *i*th second preset period; and $N_{i,j,k}$ is a number of network indicators sent by the *j*th terminal in the *k*th first network quality indicator range in the *i*th second preset period, or $N_{i,j,k}$ is a number of second preset periods in the first preset period.

12. The method according to claim 4 or claim 5, wherein when the average coverage distance of any preset network quality indicator range is an average value of at least one target distance metrics, and the at least one preset network quality indicator range is the at least one second network quality indicator range in each preset antenna azimuth AOA group, an average coverage distance of a *k*th second network quality indicator range in a *t*th AOA group meets the following formula:

$$Mean\_TA_{R_{k,t}} = \frac{\sum_i \sum_j TA_{i,j,k,t}}{\sum_i \sum_j N_{i,j,k,t}};$$

wherein, $Mean\_TA_{R_{k,t}}$ is the average coverage distance of the *k*th second network quality indicator range in the *t*th AOA group; $TA_{i,j,k,t}$ is a distance metrics sent by a *j*th terminal in the *k*th second network quality indicator range in the *t*th AOA group in an *i*th second preset period; and $N_{i,j,k,t}$ is a number of network indicators sent by the *j*th terminal in the *k*th second network quality indicator range in the *t*th AOA group in the *i*th second preset period, or $N_{i,j,k,t}$ is a number of second preset periods in the first preset period.

13. The method according to claim 5, wherein when the average coverage distance of any preset network quality indicator range is an average value of at least one target distance metrics, and the at least one preset network quality indicator range is the at least one third network quality indicator range in each preset HAOA group, an average coverage distance of a *k*th third network quality indicator range in an *m*th HAOA group meets the following formula:

$$Mean\_TA_{R_{k,m}} = \frac{\sum_i \sum_j TA_{i,j,k,m}}{\sum_i \sum_j N_{i,j,k,m}};$$

wherein, $Mean\_TA_{R_{k,m}}$ is the average coverage distance of the $k$th third network quality indicator range in the $m$th HAOA group; $TA_{i,j,k,m}$ is a distance metrics sent by a $j$th terminal in the $k$th third network quality indicator range in the $m$th HAOA group in an $i$th second preset period; and $N_{i,j,k,m}$ is a number of network indicators sent by the $j$th terminal in the $k$th third network quality indicator range in the $m$th HAOA group in the $i$th second preset period, or $N_{i,j,k,m}$ is a number of second preset periods in the first preset period.

14. The method according to claim 5, wherein when the average coverage distance of any preset network quality indicator range is an average value of at least one target distance metrics, and the at least one preset network quality indicator range is the at least one fourth network quality indicator range in each preset VAOA group, an average coverage distance of a $k$th fourth network quality indicator range in an $n$th VAOA group meets the following formula:

$$Mean\_TA_{R_{k,n}} = \frac{\sum_i \sum_j TA_{i,j,k,n}}{\sum_i \sum_j N_{i,j,k,n}};$$

wherein, $Mean\_TA_{R_{k,n}}$ is the average coverage distance of the $k$th fourth network quality indicator range in the $n$th VAOA group; $TA_{i,j,k,n}$ is a distance metrics sent by a $j$th terminal in the $k$th fourth network quality indicator range in the $n$th VAOA group in an $i$th second preset period; and $N_{i,j,k,n}$ is a number of network indicators sent by the $j$th terminal in the $k$th fourth network quality indicator range in the $n$th VAOA group in the $i$th second preset period, or $N_{i,j,k,n}$ is a number of second preset periods in the first preset period.

15. The method according to claim 5, wherein when the average coverage distance of any preset network quality indicator range is an average value of at least one target distance metrics, and the at least one preset network quality indicator range is the at least one fifth network quality indicator range in each preset spatial coverage direction group, an average coverage distance of a $k$th fifth network quality indicator range in an $h$th spatial coverage direction group meets the following formula:

$$Mean\_TA_{R_{k,h}} = \frac{\sum_i \sum_j (R_{i,j,k,h} \times TA_{i,j,k,h})}{\sum_i \sum_j R_{i,j,k,h}};$$

wherein, $Mean\_TA_{R_{k,h}}$ is the average coverage distance of the $k$th fifth network quality indicator range in the $h$th spatial coverage direction group; the $h$th spatial coverage direction group is a direction angle group in which an $m$th VAOA group and an $n$th HAOA group coexist; $TA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a number of network indicators sent by the $j$th terminal in the $k$th fifth network quality indicator range in the $h$th spatial coverage direction group in the $i$th second preset period, or $R_{i,j,k,h}$ is a number of second preset periods in the first preset period.

16. The method according to claim 3, wherein when the distance metrics comprises a timing advance in a horizontal direction, HTA, the at least one preset network quality indicator range is at least one preset first network quality indicator range; the HTA is determined based on a TA, a VAOA, and an antenna mechanical downtilt of the target cell; or
the at least one preset network quality indicator range is at least one second network quality indicator range in each preset antenna azimuth AOA group.

17. The method according to claim 16, wherein the AOA group is any one of the following: an antenna horizontal azimuth HAOA group, an antenna vertical azimuth VAOA group, and a spatial coverage direction group; the HAOA group is an azimuth angle group determined by dividing a horizontal coverage plane of the target cell; the VAOA group is an azimuth angle group determined by dividing a vertical coverage plane of the target cell; and the spatial coverage direction group is an azimuth angle group in which the VAOA group and the HAOA group coexist;
the at least one second network quality indicator range in each preset AOA group is:

at least one third network quality indicator range in each preset HAOA group; or

at least one fourth network quality indicator range in each preset VAOA group; or
at least one fifth network quality indicator range in each preset spatial coverage direction group.

18. The method according to claim 16 or claim 17, wherein when the average coverage distance of any preset network quality indicator range is a ratio of a sum of at least one first product to a sum of at least one target network quality indicator, and the at least one preset network quality indicator range is the at least one preset first network quality indicator range, an average coverage distance of a $k$th first network quality indicator range meets the following formula:

$$Mean\_HTA_{R_k} = \frac{\sum_i \sum_j (R_{i,j,k} \times HTA_{i,j,k})}{\sum_i \sum_j R_{i,j,k}};$$

wherein, $Mean\_HTA_{R_k}$ is the average coverage distance of the $k$th first network quality indicator range; $HTA_{i,j,k}$ is a distance metrics sent by a $j$th terminal in the $k$th first network quality indicator range in an $i$th second preset period; and $R_{i,j,k}$ is a network quality indicator corresponding to the distance metrics sent by the $j$th terminal in the $k$th first network quality indicator range in the $i$th second preset period.

19. The method according to claim 16 or claim 17, wherein when the average coverage distance of any preset network quality indicator range is a ratio of a sum of at least one first product to a sum of at least one target network quality indicator, and the at least one preset network quality indicator range is at least one second network quality indicator range in each preset antenna azimuth AOA group, an average coverage distance of a $k$th second network quality indicator range in a $t$th AOA group meets the following formula:

$$Mean\_HTA_{R_{k,t}} = \frac{\sum_i \sum_j (R_{i,j,k,t} \times HTA_{i,j,k,t})}{\sum_i \sum_j R_{i,j,k,t}};$$

wherein, $Mean\_TA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $R_{i,j,k,t}$ is a network quality indicator corresponding to the distance metrics sent by the $j$th terminal in the $k$th second network quality indicator range in the $t$th AOA group in the $i$th second preset period.

20. The method according to claim 17, wherein when the average coverage distance of any preset network quality indicator range is a ratio of a sum of at least one first product to a sum of at least one target network quality indicator, and the at least one preset network quality indicator range is the at least one third network quality indicator range in each preset HAOA group, an average coverage distance of a $k$th third network quality indicator range in an $m$th HAOA group meets the following formula:

$$Mean\_HTA_{R_{k,m}} = \frac{\sum_i \sum_j (R_{i,j,k,m} \times HTA_{i,j,k,m})}{\sum_i \sum_j R_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $R_{i,j,k,m}$ is a network quality indicator corresponding to the distance metrics sent by the $j$th terminal in the $k$th third network quality indicator range in the $m$th HAOA group in the $i$th second preset period.

21. The method according to claim 17, wherein when the average coverage distance of any preset network quality indicator range is a ratio of a sum of at least one first product to a sum of at least one target network quality indicator, and the at least one preset network quality indicator range is the at least one fourth network quality indicator range in each preset VAOA group, an average coverage distance of a $k$th fourth network quality indicator range in an $n$th VAOA group meets the following formula:

$$Mean\_HTA_{R_{k,n}} = \frac{\Sigma_i\ \Sigma_j(R_{i,j,k,n}\times HTA_{i,j,k,n})}{\Sigma_i\ \Sigma_j\ R_{i,j,k,n}};$$

wherein, $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is a network quality indicator corresponding to the distance metrics sent by the $j$th terminal in the $k$th fourth network quality indicator range in the $n$th VAOA group in the $i$th second preset period.

22. The method according to claim 17, wherein when the average coverage distance of any preset network quality indicator range is a ratio of a sum of at least one first product to a sum of at least one target network quality indicator, and the at least one preset network quality indicator range is the at least one fifth network quality indicator range in each preset spatial coverage direction group, an average coverage distance of a $k$th fifth network quality indicator range in an $h$th spatial coverage direction group meets the following formula:

$$Mean\_HTA_{R_{k,h}} = \frac{\Sigma_i\ \Sigma_j(R_{i,j,k,h}\times HTA_{i,j,k,h})}{\Sigma_i\ \Sigma_j R_{i,j,k,h}};$$

wherein, $Mean\_HTA_{R_{k,h}}$ is the average coverage distance of the $k$th fifth network quality indicator range in the $h$th spatial coverage direction group; the $h$th spatial coverage direction group is a direction angle group in which an $m$th VAOA group and an $n$th HAOA group coexist; $HTA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a network quality indicator corresponding to the distance metrics sent by the $j$th terminal in the $k$th fifth network quality indicator range in the $h$th spatial coverage direction group in the $i$th second preset period.

23. The method according to claim 16 or claim 17, wherein when the average coverage distance of any preset network quality indicator range is an average value of at least one target distance metrics, and the at least one preset network quality indicator range is the at least one preset first network quality indicator range, an average coverage distance of a $k$th first network quality indicator range meets the following formula:

$$Mean\_HTA_{R_k} = \frac{\Sigma_i\ \Sigma_j\ HTA_{i,j,k}}{\Sigma_i\ \Sigma_j\ N_{i,j,k}};$$

wherein, $Mean\_HTA_{R_k}$ is the average coverage distance of the $k$th first network quality indicator range; $HTA_{i,j,k}$ is a distance metrics sent by a $j$th terminal in the $k$th first network quality indicator range in an $i$th second preset period; and $N_{i,j,k}$ is a number of network indicators sent by the $j$th terminal in the $k$th first network quality indicator range in the $i$th second preset period, or $N_{i,j,k}$ is a number of second preset periods in the first preset period.

24. The method according to claim 16 or claim 17, wherein when the average coverage distance of any preset network quality indicator range is an average value of at least one target distance metrics, and the at least one preset network quality indicator range is the at least one second network quality indicator range in each preset antenna azimuth AOA group, an average coverage distance of a $k$th second network quality indicator range in a $t$th AOA group meets the following formula:

$$Mean\_HTA_{R_{k,t}} = \frac{\Sigma_i\ \Sigma_j\ HTA_{i,j,k,t}}{\Sigma_i\ \Sigma_j\ N_{i,j,k,t}};$$

wherein, $Mean\_HTA_{R_{k,t}}$ is the average coverage distance of the $k$th second network quality indicator range in the $t$th AOA group; $HTA_{i,j,k,t}$ is a distance metrics sent by a $j$th terminal in the $k$th second network quality indicator range in the $t$th AOA group in an $i$th second preset period; and $N_{i,j,k,t}$ is a number of network indicators sent by the $j$th terminal in the $k$th second network quality indicator range in the $t$th AOA group in the $i$th second preset period, or $N_{i,j,k,t}$ is a number of second preset periods in the first preset period.

25. The method according to claim 18, wherein when the average coverage distance of any preset network quality indicator range is an average value of at least one target distance metrics, and the at least one preset network quality indicator range is the at least one third network quality indicator range in each preset HAOA group, an average coverage distance of a $k$th third network quality indicator range in an $m$th HAOA group meets the following formula:

$$Mean\_HTA_{R_{k,m}} = \frac{\sum_i \sum_j HTA_{i,j,k,m}}{\sum_i \sum_j N_{i,j,k,m}};$$

wherein, $Mean\_HTA_{R_{k,m}}$ is the average coverage distance of the $k$th third network quality indicator range in the $m$th HAOA group; $HTA_{i,j,k,m}$ is a distance metrics sent by a $j$th terminal in the $k$th third network quality indicator range in the $m$th HAOA group in an $i$th second preset period; and $N_{i,j,k,m}$ is a number of network indicators sent by the $j$th terminal in the $k$th third network quality indicator range in the $m$th HAOA group in the $i$th second preset period, or $N_{i,j,k,m}$ is a number of second preset periods in the first preset period.

26. The method according to claim 17, wherein when the average coverage distance of any preset network quality indicator range is an average value of at least one target distance metrics, and the at least one preset network quality indicator range is the at least one fourth network quality indicator range in each preset VAOA group, an average coverage distance of a $k$th fourth network quality indicator range in an $n$th VAOA group meets the following formula:

$$Mean\_HTA_{R_{k,n}} = \frac{\sum_i \sum_j (R_{i,j,k,n} \times HTA_{i,j,k,n})}{\sum_i \sum_j R_{i,j,k,n}};$$

wherein, $Mean\_HTA_{R_{k,n}}$ is the average coverage distance of the $k$th fourth network quality indicator range in the $n$th VAOA group; $HTA_{i,j,k,n}$ is a distance metrics sent by a $j$th terminal in the $k$th fourth network quality indicator range in the $n$th VAOA group in an $i$th second preset period; and $R_{i,j,k,n}$ is a number of network indicators sent by the $j$th terminal in the $k$th fourth network quality indicator range in the $n$th VAOA group in the $i$th second preset period, or $R_{i,j,k,n}$ is a number of second preset periods in the first preset period.

27. The method according to claim 17, wherein when the average coverage distance of any preset network quality indicator range is an average value of at least one target distance metrics, and the at least one preset network quality indicator range is the at least one fifth network quality indicator range in each preset spatial coverage direction group, an average coverage distance of a $k$th fifth network quality indicator range in an $h$th spatial coverage direction group meets the following formula:

$$Mean\_HTA_{R_{k,h}} = \frac{\sum_i \sum_j HTA_{i,j,k,h}}{\sum_i \sum_j N_{i,j,k,h}};$$

wherein, $Mean\_HTA_{R_{k,h}}$ is the average coverage distance of the $k$th fifth network quality indicator range in the $h$th spatial coverage direction group; the $h$th spatial coverage direction group is a direction angle group in which an $m$th VAOA group and an $n$th HAOA group coexist; $HTA_{i,j,k,h}$ is a distance metrics sent by a $j$th terminal in the $k$th fifth network quality indicator range in the $h$th spatial coverage direction group in an $i$th second preset period; and $R_{i,j,k,h}$ is a number of network indicators sent by the $j$th terminal in the $k$th fifth network quality indicator range in the $h$th spatial coverage direction group in the $i$th second preset period, or $N_{i,j,k,h}$ is a number of second preset periods in the first preset period.

28. A coverage distance determination apparatus, **characterized by** comprising: a determination unit,

the determination unit is configured to determine a plurality of network indicators of a target cell in a first preset period, each of the network indicators including a network quality indicator and a distance metrics; and
the determination unit is further configured to determine an average coverage distance of at least one preset network quality indicator range based on network quality indicators and distance metrics in individual network indicators.

29. A coverage distance determination apparatus, **characterized by** comprising a memory and a processor; the memory is configured to store computer-executable instructions, and the processor is connected to the memory via a bus; and when the coverage distance determination apparatus runs, the processor executes the computer-executable instructions stored in the memory, so that the coverage distance determination apparatus performs the coverage distance determination method according to claims 1-27.

**30.** A computer-readable storage medium, wherein the computer-readable storage medium comprises computer-executable instructions which, when running on a computer, cause the computer to perform the coverage distance determination method according to claims 1-27.

Coverage distance determination system

Fig. 1

Fig. 2

| S301 |
| --- |
| Determine a plurality of network indicators of a target cell in a first preset period |

| S302 |
| --- |
| On the basis of a network quality indicator and a distance metrics in each network indicator, determine an average coverage distance of at least one preset network quality indicator range |

Fig. 3

S401

Acquire at least one initial network indicator of the target cell in each second preset period

S301

S402

On the basis of the at least one initial network indicator in each second preset period, determine each network indicator

S302

On the basis of a network quality indicator and a distance metrics in each network index, determine an average coverage distance of at least one preset network quality indicator range

Fig. 4

S501

Determine at least one target network quality indicator belonging to a target preset network quality indicator range from a plurality of distance metrics of measurement data

S502

Determine a target distance metrics corresponding to each target network quality indicator

S503

On the basis of the target distance metrics corresponding to each target network quality indicator, determine at least one first product

S504

Determine a ratio of a sum of the at least one first product to a sum of the at least one target network quality indicator as an average coverage distance of the target preset network quality indicator range

Fig. 5

S301

Determine a plurality of network indicators of a target cell

S302

S601

Determine, on the basis of network quality indicators in at least one first network quality indicator range and TA corresponding to the network quality indicators, an average coverage distance of the at least one first network quality indicator range

Fig. 6

S301

Determine a plurality of network indicators of a target cell

S302

S701

Determine, on the basis of network quality indicators in at least one third network quality indicator range and TA corresponding to the network quality indicators, an average coverage distance of the at least one third network quality indicator range

Fig. 7

S301

Determine a plurality of network indicators of a target cell

S302

S801

Determine, on the basis of network quality indicators in at least one fourth network quality indicator range and TA corresponding to the network quality indicators, an average coverage distance of the at least one fourth network quality indicator range

Fig. 8

S301

Determine a plurality of network indicators of a target cell

S302

S901

Determine, on the basis of network quality indicators in at least one fifth network quality indicator range and TA corresponding to the network quality indicators, an average coverage distance of the at least one fifth network quality indicator range

Fig. 9

S301

Determine a plurality of network Indicators of a target cell

S302

S1001

Determine an average coverage distance of at least one first network quality indicator range on the basis of network quality indicators in the at least one first network quality indicator range and HTA corresponding to the network quality indicators

Fig. 10

S301

Determine a plurality of network indicators of a target cell

S302

S1101

Determine an average coverage distance of at least one third network quality indicator range on the basis of network quality indicators in the at least one third network quality indicator range and HTA corresponding to the network quality indicators

Fig. 11

S301

Determine a plurality of network indicators of a target cell

S302

S1201

Determine an average coverage distance of at least one fourth network quality indicator range on the basis of network quality indicators in the at least one fourth network quality Indicator range and HTA corresponding to the network quality indicators

Fig. 12

S301

Determine a plurality of network indicators of a target cell

S302

S1301

Determine an average coverage distance of at least one fifth network quality Indicator range on the basis of network quality indicators in the at least one fifth network quality indicator range and HTA corresponding to the network quality indicators

Fig. 13

Coverage distance determination apparatus

1401

Determination unit

Fig. 14

## INTERNATIONAL SEARCH REPORT

| International application No. |
| --- |
| **PCT/CN2024/121444** |

| A. | CLASSIFICATION OF SUBJECT MATTER |
| --- | --- |
| | H04W24/08(2009.01)i |

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI; CNTXT; VEN; USTXT; 3GPP: 对应关系, 范围, 覆盖, 覆盖范围, 覆盖距离, 距离, 平均, 区间, 时间提前, 网络指标, 网络质量, 网络状态, average, coverage, distance, interval, quality, RSRP, RSRQ, SINR, TA, AOA

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117544996 A (CHINA UNITED NETWORK COMMUNICATIONS GROUP CO., LTD.) 09 February 2024 (2024-02-09) claims 1-30 | 1-30 |
| A | CN 112969186 A (CHINA UNITED NETWORK COMMUNICATIONS GROUP CO., LTD.) 15 June 2021 (2021-06-15) description, paragraphs [0055]-[0080] | 1-30 |
| A | US 2009011713 A1 (PROXIMETRY INC.) 08 January 2009 (2009-01-08) entire document | 1-30 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2024** | **16 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/121444**

| Patent document cited in search report | | | Publication date (day/month/year) | Patent family member(s) | | | Publication date (day/month/year) |
|---|---|---|---|---|---|---|---|
| CN | 117544996 | A | 09 February 2024 | None | | | |
| CN | 112969186 | A | 15 June 2021 | None | | | |
| US | 2009011713 | A1 | 08 January 2009 | WO | 2008121878 | A1 | 09 October 2008 |